# EUROPEAN PATENT APPLICATION

(11) **EP 4 294 098 A1**
(43) Date of publication of application: **20.12.2023**
(21) Application number: 21929258.8
(22) Date of filing: 28.12.2021
(51) Int. Cl.: H04W 72/04, H04W 74/02, H04W 84/12

(54) **COMMUNICATION DEVICE AND COMMUNICATION METHOD**

(30) Priority: 02.03.2021 JP 2021033042
(71) Applicant: Sony Group Corporation, Tokyo 108-0075 (JP)
(72) Inventor: SUGAYA, Shigeru, Tokyo 108-0075 (JP); TANAKA, Yusuke, Tokyo 108-0075 (JP); TANAKA, Ken, Tokyo 108-0075 (JP); HIRATA, Ryuichi, Tokyo 108-0075 (JP)
(74) Representative: D Young & Co LLP
(86) International application number: PCT/JP2021/048858
(87) International publication number: WO 2022/185702

(57) **Abstract**

A communication device that performs multi-link and multi-user communication is provided.

A communication device includes a communication unit capable of wirelessly communicating on a plurality of links, a communication processing unit that performs processing of simultaneously transmitting data to a plurality of reception-side communication devices, and a control unit that performs control to transmit data using an optimum link to each of the plurality of reception-side communication devices. The control unit performs control to transmit a trigger request signal for requesting information regarding a reception opportunity from the plurality of reception-side communication devices on a link on which a transmission opportunity has been acquired, and determine an optimum link for each reception-side communication device on the basis of a request response signal from the plurality of reception-side communication devices.

## Description

### TECHNICAL FIELD

The technology disclosed in the present description (hereinafter, "the present disclosure") relates to a communication device and a communication method for performing wireless communication.

### BACKGROUND ART

With an increase in use of a wireless local area network (LAN) system and an increase in content capacity, communication of a predetermined data amount is getting insufficient in a case where a channel of only one frequency band is used. Therefore, as a technical study for a successor standard of IEEE 802.11ax, a method of performing higher-density data communication using a plurality of frequency bands (links) in parallel, specifically, a multi-link operation (MLO) technology of collectively transmitting a group of contents using a plurality of frequency bands (links) is studied in a task group TG be of IEEE.

In this multi-link operation, there is a demand for a technology that regards a plurality of frequency bands (links) as one transmission path and uses the transmission path for communication. In the technology, although a device of Enhanced Multi-Link Multi Radio (EMLMR) is assumed as a device including a plurality of wireless communication units so that transmission and reception can be performed simultaneously on all links, a device of Enhanced Multi-Link Single Radio (EMLSR) is also assumed as a configuration of a communication device that can perform only transmission or reception on one link. In a network of an actual wireless LAN system, it is also assumed that these two types are mixed.

In conventional multi-link operation, a configuration in which both an access point and a communication terminal simultaneously perform communication using the same plurality of links is assumed.

On the other hand, in an existing wireless LAN system, multi-user multiplex communication has been put into practical use. For example, there has been proposed a wireless LAN system that multiplexes and transmits more data by simultaneously transmitting and receiving a plurality of streams on one frequency channel. Specifically, any resource is allocated from an access point to each of a plurality of communication terminals and transmitted, and each communication terminal on the reception side can receive desired data by separating and decoding each resource. That is, in conventional downlink multi-user (DL MU) communication, even in a case where data is unilaterally multiplexed and transmitted from an access point, all communication terminals perform reception on the frequency channels (links), and data for each user can be obtained by separation on the basis of information described in header information of a received frame.

In IEEE 802.11ax, regarding resource allocation in multiplex communication, in a case of performing uplink and downlink multi-user multiplex communication, an access point (AP) performs notification of Bandwidth Query Report Poll (BQRP) Trigger Frame, communication terminals (STAs), in response to this, return Bandwidth Query Report (BQR) including available channel information in Bandwidth Query Report Control Subfield, and the AP performs resource allocation on the basis of the BQR from the STAs (see, for example, Non-Patent Document 1).

### CITATION LIST

### NON-PATENT DOCUMENT

Non-Patent Document 1: IEEE 802.11ax Contribution (IEEE 802.11-18/0031r0)

### SUMMARY OF THE INVENTION

### PROBLEMS TO BE SOLVED BY THE INVENTION

An object of the present disclosure is to provide a communication device and a communication method for performing wireless communication with a plurality of users using a plurality of frequency bands.

### SOLUTIONS TO PROBLEMS

The present disclosure has been made in view of the issue described above, and a first aspect thereof is
a communication device including
a communication unit capable of wirelessly communicating on a plurality of links,
a communication processing unit that performs processing of simultaneously transmitting data to a plurality of reception-side communication devices, and
a control unit that performs control to transmit data using an optimum link to each of the plurality of reception-side communication devices.

The control unit performs control to transmit a trigger request signal for requesting information regarding a reception opportunity from the plurality of reception-side communication devices on a link on which a transmission opportunity has been acquired, and determine an optimum link for each reception-side communication device on the basis of a request response signal from the plurality of reception-side communication devices.

Furthermore, the control unit performs control to transmit an allocation signal including information regarding a link allocated to each reception-side communication device and information regarding multi-user multiplex communication.

Furthermore, the control unit controls simultaneous data transmission to the plurality of reception-side communication devices using the plurality of links on the basis of information regarding a link allocated to each reception-side communication device and information regarding multi-user multiplex communication.

Furthermore, a second aspect of the present disclosure is
a communication method in a communication device capable of wirelessly communicating on a plurality of links, the method including
a step of determining an optimum link for each of the plurality of reception-side communication devices, and
a step of simultaneously transmitting data to a plurality of reception-side communication devices using an optimum link of each reception-side communication device.

Furthermore, a third aspect of the present disclosure is
a communication device including a
communication unit capable of wirelessly communicating on a plurality of links,
a communication processing unit that performs processing of receiving data addressed to the communication device among data simultaneously transmitted from a transmission-side communication device to a plurality of reception-side communication devices, and
a control unit that notifies the transmission-side communication device of a reception opportunity of a link available to the communication device, and performs control to receive data on a link designated by the transmission-side communication device.

The control unit performs control to return a request response signal on a link on which a reception opportunity can be acquired on an all link on which a reception opportunity has been able to be acquired in response to reception of a trigger request signal from the transmission-side communication device.

Furthermore, the control unit performs control to wait for reception of data addressed to a plurality of reception-side communication devices from the transmission-side communication device on a link on which the request response signal has been transmitted.

Furthermore, a fourth aspect of the present disclosure is a communication method in a communication device capable of wirelessly communicating on a plurality of links, the method including
a step of notifying a transmission-side communication device of information regarding a reception opportunity of a link available to the communication device, and
a step of receiving data addressed to the communication device among data simultaneously transmitted from the transmission-side communication device to a plurality of reception-side communication devices on a link designated by the transmission-side communication device.

### EFFECTS OF THE INVENTION

According to the present disclosure, a communication device and a communication method for performing wireless communication with a plurality of users using a plurality of links can be provided.

Note that the effects described in the present specification are merely examples, and the effects brought by the present disclosure are not limited thereto. Furthermore, the present disclosure may further provide additional effects in addition to the effects described above.

Still another object, feature, and advantage of the present disclosure will become clear by further detailed description with reference to an embodiment to be described below and the attached drawings.

### BRIEF DESCRIPTION OF DRAWINGS

Fig. 1 is a diagram illustrating states of networks of a wireless LAN system.
Fig. 2 is a diagram illustrating an example of frequency bands and channel allocation used in the wireless LAN system.
Fig. 3 is a diagram illustrating an example in which downlink multi-user multiplex communication (DLMU) is applied to the MLO.
Fig. 4 is a diagram illustrating a modification in which downlink multi-user multiplex communication (DLMU) is applied to the MLO.
Fig. 5 is a diagram illustrating another modification in which downlink multi-user multiplex communication (DLMU) is applied to the MLO.
Fig. 6 is a diagram illustrating a modification in which uplink multi-user multiplex communication (UL MU) is performed after downlink multi-user multiplex communication (DL MU) to which the MLO is applied.
Fig. 7 is a diagram illustrating an example of a usage detection status of multi-links in an AP 10.
Fig. 8 is a diagram illustrating an example of a usage detection status of the multi-links in an STA 11 subordinate to the AP 10.
Fig. 9 is a diagram illustrating an example of a usage detection status of the multi-links in an STA 12 subordinate to the AP 10.
Fig. 10 is a diagram illustrating an example of a usage detection status of the multi-links in an STA 13 subordinate to the AP 10.
Fig. 11 is a diagram illustrating an example of a usage detection status of the multi-links in an STA 14 subordinate to the AP 10.
Fig. 12 is a diagram illustrating an implementation example in which downlink multi-user communication is applied to the multi-links in the AP 10.
Fig. 13 is a diagram illustrating an implementation example in which downlink multi-user communication is applied to the multi-links in the STA 11 subordinate to the AP 10.
Fig. 14 is a diagram illustrating an implementation example in which downlink multi-user communication is applied to the multi-links in the STA 12 subordinate to the AP 10.
Fig. 15 is a diagram illustrating an implementation example in which downlink multi-user communication is applied to the multi-links in the STA 13 subordinate to the AP 10.
Fig. 16 is a diagram illustrating an implementation example in which downlink multi-user communication is applied to the multi-links of an EMLSR device.
Fig. 17 is a diagram illustrating a sequence example of downlink multi-user multiplex communication of each link.
Fig. 18 is a diagram illustrating a sequence example of downlink multi-user multiplex communication of each link.
Fig. 19 is a diagram illustrating a functional configuration of a wireless communication device 1900.
Fig. 20 is a diagram illustrating an internal configuration of a wireless communication module 1905.
Fig. 21 is a diagram illustrating a configuration of a management frame necessary for setting the MLO.
Fig. 22 is a diagram illustrating frame formats corresponding to respective values described in a Type field of an MU MLO information element.
Fig. 23 is a diagram illustrating a configuration of an MU MLO Infornmation Element field of a Downlink Trigger Request (TR) frame.
Fig. 24 is a diagram illustrating a configuration of an MU MLO Infornmation Element field of a DL Request Response (RR) frame.
Fig. 25 is a diagram illustrating a configuration of an MU MLO Infornmation Element field of a DL Allocation (AL) frame.
Fig. 26 is a diagram illustrating a configuration of a downlink Block Acknowledgement (BA) frame.
Fig. 27 is a flowchart illustrating operation performed by an access point during downlink communication.
Fig. 28 is a flowchart illustrating operation performed by the access point during the downlink communication.
Fig. 29 is a flowchart illustrating operation performed by a communication terminal during downlink communication.
Fig. 30 is a flowchart illustrating operation performed by the communication terminal during the downlink communication.

### MODE FOR CARRYING OUT THE INVENTION

Hereinafter, the present disclosure will be described in the following order with reference to the drawings.

A. Overview
B. Network Configuration
C. Downlink Multi-User Multiplex Communication Applied to MLO
D. Usage Detection Statuses of Multi-Links in AP and STA
E. Implementation Example in Which Downlink Multi-User Communication is Applied to Multi-Links
F. Sequence of Downlink Multi-User Multiplex Communication of Each Link
G. Configuration of Wireless Communication Device
H. Frame Configuration
I. Operation Example of Downlink Communication
J. Effects

### A. Overview

From the viewpoint of securing compatibility with a conventional wireless LAN system, in a case where a transmission path is being used on one of a plurality of frequency bands (links), there are an issue that transmission using the frequency band (link) cannot be performed and an issue that timing at which transmission is possible differs for each of the frequency bands (links). Furthermore, random backoff needs to be set for each of the frequency bands (links), but there is also an issue that transmission is not simultaneously started on each of the frequency bands (links) depending on a set value of the random backoff even if the transmission path is in an empty state.

Moreover, even if a link is available in a certain communication device, the link may not be available in another communication device, and thus, there is also an issue that simultaneously transmitting data addressed to a plurality of communication devices is difficult. For example, in a case where an access point uses three links from a first link to a third link for multi-link operation, the first link and the second link may be available in a certain communication terminal connected to the access point, but the first link and the third link may be available in another communication terminal.

Regarding multi-link operation, as communication terminals that cannot simultaneously receive a plurality of links, devices that are Enhanced Single Radio also exist on a network. Therefore, a technology that does not contradict operation of these communication devices is required to be established.

In conventional downlink multi-user communication, all reception-side communication devices perform reception on the frequency channels (links). Here, in a case where another basic service set (BSS) that exists in an overlapping manner in the vicinity, that is, an overlapping basic service set (OBSS) exists, there is a high possibility that some reception-side communication devices of multi-link operation cannot correctly receive header information of a received frame.

However, in BQRP Trigger Frame standardized in IEEE 802.11ax, there is an issue that the setting to STAs is performed only for requesting return of BQR and notification of a detailed parameter cannot be performed.

Furthermore, there is an issue that, in BQR Control Subfield standardized in IEEE 802.11ax, only short information can be returned, and only about 8 pieces of available channel information can be continuously transmitted.

Moreover, channel availability determination is made on the basis of a detection result of clear channel assessment (CCA). For this reason, there is an issue that, even in a state where a network allocation vector (NAV) is set at the time of receiving a signal from an OBSS STA in advance, it is determined that a channel is available if a signal is not actually detected, and in a case where the channel is allocated from an access point, the NAV is actually set and transmission cannot be performed.

Issues in establishing multi-user communication in multi-link operation will be summarized.

First, there is an issue that, in a case where a communication device on the transmission side acquires a transmission right, links available to each of a plurality of communication devices on the reception side cannot be grasped at that time. That is, in a case where the communication device on the transmission side acquires a transmission opportunity (TXOP) on all links or a plurality of links and data transmission is performed without the usage statuses of these links in each of the communication devices on the reception side being grasped, the communication devices on the reception side cannot correctly receive the data.

Furthermore, since it is difficult for a device of Enhanced Single Radio to operate on a plurality of links, there is an issue that reception cannot be simultaneously performed on a plurality of links in multi-link operation. Therefore, in Enhanced Single Radio, an available link needs to be preferentially caused to be used.

Therefore, at the time of multi-link operation, each of a plurality of communication devices on the reception side that are multi-users notifies a communication device on the transmission side of information of a reception opportunity (RXOP) on an available link, and the communication device on the transmission side needs to determine to which link data addressed to the communication devices on the reception side is to be allocated and transmitted according to the RXOP status of each of the communication devices on the reception side.

Next, according to the present disclosure, a method in which communication devices on the reception side exchange RXOP information in a case of performing multi-user communication in multi-link operation, and a method in which an AP that is TXOP Holder grasps RXOP for each STA, determines availability for each STA, and performs control to appropriately allocate each link of multi-links will be described.

Downlink multi-user communication by multi-link operation (MLO) from an access point (AP) to a plurality of subordinate communication terminals (STAs) is performed by the following procedure.

(1) The AP transmits MU-MLO Trigger Request to each of the STAs on the reception side on a link on which transmission can be performed.
(2) Each of the STAs returns MU-MLO Request Response including RXOP information on multi-links to the AP.
(3) The AP sets a downlink resource to be used for reception for each of the STAs from the RXOP information received from each of the STAs on the reception side.
(4) If necessary (or optionally), the AP transmits MU-MLO Allocation to the STAs to notify the STAs of links to be used.
(5) The STAs perform waiting operation on all links on which the MU-MLO Request Response has been returned.
(6) Upon receiving the MU-MLO Allocation from the AP, the STAs receive data from the AP only on links allocated to the STAs.
(7) Upon returning Block ACK to the AP, the STAs continue to return Block ACK including RXOP information indicating the availability.
(8) Upon receiving the Block Ack returned from the STAs, the AP performs notification of retransmission of undelivered data by Allocation (optional).
(9) Even if there is no MU-MLO Request Response, the AP may transmit urgent data using a remaining link.

Furthermore, the AP may repeatedly perform downlink MLO including operation of (1) to (9) described above over time during which TXOP is obtained. In addition, in a case where reverse direction, that is, uplink data transmission is required, the AP may continue to allocate parameters for uplink multi-user communication, or may allocate new parameters.

### B. Network Configuration

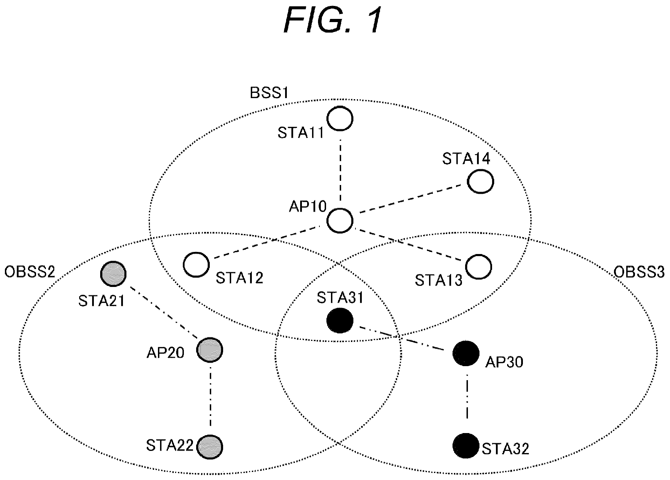

Fig. 1 illustrates states of networks of a wireless LAN system to which the present disclosure is applied. In the illustrated example, a plurality of communication terminals (STAs 11 to 14) is connected to a Basic Service Set 1 (BBS 1) that is a network operated by an access point (AP 10).

Furthermore, another BBS (OBSS) exists in the neighborhood of the BBS1 in an overlapping manner. In the example illustrated in Fig. 1, there are an OBSS 2 operated by an AP 20 and an OBSS 3 operated by an AP 30. Then, an STA 21 and an STA 22 are connected to the OBSS 2, and an STA 31 and an STA 32 are connected to the OBSS 3.

Note that, in Fig. 1, radio wave coverage of each access point AP 10, AP20, and AP 30 is indicated by an ellipse drawn using a dotted line, and this indicates the range of each network.

In the states of networks illustrated in Fig. 1, the STA 12 can grasp a signal from the AP 20 of the BSS 2, and the STA 13 can grasp a signal from the AP 30 of the BSS 3. Therefore, in the BSS 1, a network configuration is adopted in which interference is received or given from or to each other in a case where the same link as that of each adjacent OBSS is used.

In the present embodiment, for example, it is assumed that multi-link operation is performed in the BBS 1. Furthermore, it is assumed that the multi-link operation is performed even in an environment in which an EMLMR device and an EMLSR device are mixed in the BBS1.

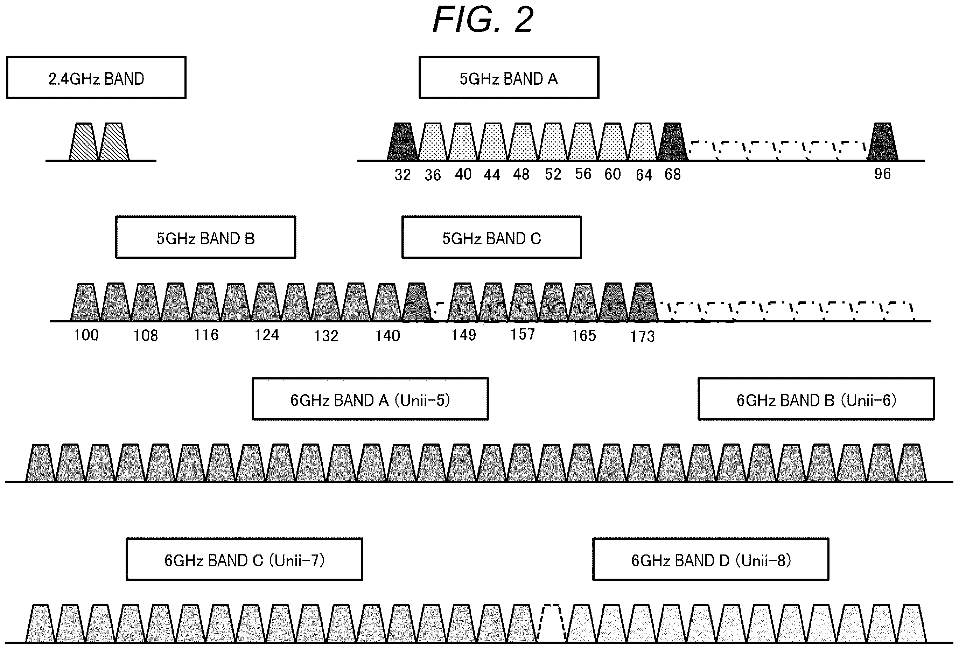

Fig. 2 illustrates an example of frequency bands and channel allocation used in the wireless LAN system to which the present disclosure is applied. In the drawing, an example of channel allocation on each of the frequency bands of a 2.4 GHz band, a 5 GHz band, and a 6 GHz band that available to the wireless LAN is illustrated. In each of the frequency bands, the horizontal axis is a frequency axis.

In the 2.4 GHz band, in a case of applying to a wireless signal of an orthogonal frequency division multiplexing (OFDM) method with a 20 MHz bandwidth in the IEEE 802.11g standard, frequencies for at least two channels are set.

Furthermore, in the 5 GHz band, a plurality of channels to be applied to a wireless signal of the OFDM method with the 20 MHz bandwidth can be secured for a standard of IEEE 802.11a and the like. However, operation in the 5 GHz band is provided with conditions for determining an available frequency range, transmission power, and transmission possibility by the legal systems of respective countries. In the 5 GHz band, channel numbers are assigned along the horizontal axis. In Japan, 8 channels from a channel 36 to a channel 64 and 11 channels from a channel 100 to a channel 140 can be used. Note that, in other countries and regions, a channel 32, a channel 68, a channel 96, and a channel 144 can also be used, and further, in the frequency band thereabove, channels 149 to 173 can be used.

Furthermore, standardization is currently in progress so that the 6 GHz band can also be used. According to the standard content, 25 channels can be arranged in the UNii-5 band of the 6 GHz band A, five channels can be arranged in the UNii-6 band of the 6 GHz band B, 17 channels can be arranged in the UNii-7 band of the 6 GHz band C, and 12 channels can be arranged in the UNii-8 band of the 6 GHz band D.

In the multi-link operation described in this specification, one link is formed by one or a combination of two or more channels in the channel configuration illustrated in Fig. 2. Furthermore, one link may be formed by two or more channels that are continuous on the frequency axis, or one link may be formed by two or more channels that are not continuous on the frequency axis.

### C. Downlink Multi-User Multiplex Communication Applied to MLO

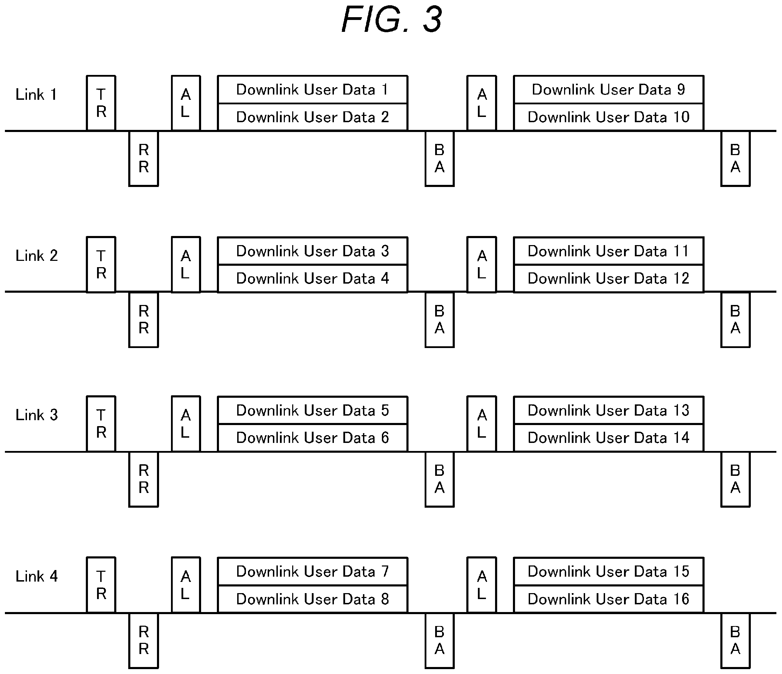

Fig. 3 illustrates an example in which downlink multi-user multiplex communication (DL MU) is applied to the MLO. Fig. 3 illustrates data transmission and reception states viewed from the viewpoint of the AP in a case where downlink multi-user multiplex communication is performed on each link of links 1 to 4 in order from the top. Provided that the horizontal axes are assumed as the time axes, data transmission and reception states of the links 1 to 4 are illustrated. In each of the time axes, a state of upward protrusion represents a state in which the AP performs transmission operation on the corresponding link, and a state of downward protrusion represents a state in which the AP performs reception operation on the corresponding link.

The AP transmits Trigger Request (TR) to each of the STAs in which data that is a sending destination exists on all available links. In a case where all the links are available and TXOP has been able to be acquired, the AP transmits TR using the links 1 to 4, but may transmit TR only on a link that has gotten available at that time.

On the other hand, each of the STAs that is on the reception side receives the TR from the AP on all the available links. The STAs return Request Response (RR) if the links on which the TR is received are available. The AP receives the RR from the STAs on each of the links.

Here, on a link on which a signal from an adjacent OBSS is detected or a link on which an NAV of the OBSS is set, the STAs do not return RR on the link so as not to interfere with communication of the OBSS. That is, the STAs that are on the reception side transmit RR including information indicating that RXOP in the links is obtained.

Note that the STAs may return RR on all available links as long as the devices are EMLMR devices. On the other hand, if the STAs are EMLSR devices, the STAs may return RR only on links on which the STAs perform reception operation. That is, resources for returning RR are allocated to STAs required to perform returning. For example, a plurality of STAs may return RR using a mechanism of uplink multi-user multiplex communication.

The AP can grasp available links capable of multi-user multiplex communication for each of the STAs according to the reception status of the RR returned from each of the STAs. Then, the AP transmits Allocation (AL) to each of the STAs to notify each of the STAs in advance of links to be used for downlink multiplex communication. Note that the AP may transmit data of later down multi-user multiplex communication using available links in notification by the STAs in RR without transmitting the AL.

Here, in a case where the STAs can receive the AL from the AP, the STAs receive data on links designated on the basis of the information. Furthermore, even if the STAs cannot receive the AL from the AP, the STAs may perform reception on the corresponding links and receive data of later multi-user multiplex communication.

In the example illustrated in Fig. 3, the AP performs DL MU transmission of Downlink User Data 1 and Downlink User Data 2 on the link 1, DL MU transmission of Downlink User Data 3 and Downlink User Data 4 on the link 2, DL MU transmission of Downlink User Data 5 and Downlink User Data 6 on the link 3, and DL MU transmission of Downlink User Data 7 and Downlink User Data 8 on the link 4.

In this way, the AP can transmit data addressed to each of the STAs by downlink multi-user multiplex communication.

Moreover, each of the STAs that has received the data by the downlink multi-user multiplex communication returns Block ACK (BA) as necessary. At that time, the AP may designate in advance resources for returning BA using, for example, the mechanism of uplink multi-user multiplex communication, and the STAs may return BA using the resources. Furthermore, the STAs may return BA including RXOP information indicating that reception can be continuously performed thereafter on the links.

In a case where retransmission is necessary according to the reception statuses of the BA from the STAs, the AP may retransmit the data by later downlink multi-user multiplex communication.

Furthermore, in a case where there is a remaining time in the TXOP in each of the links, the AP may transmit AL to each of the STAs again, or may not transmit the AL. Then, the AP performs downlink multi-user communication continuously on each of the links. Moreover, each of the STAs may be formed to return BA after performing downlink multi-user communication.

In the example illustrated in Fig. 3, the AP transmits AL to each of the STAs again, and then performs DL MU transmission of Downlink User Data 9 and Downlink User Data 10 on the link 1, DL MU transmission of Downlink User Data 11 and Downlink User Data 12 on the link 2, DL MU transmission of Downlink User Data 13 and Downlink User Data 14 on the link 3, and DL MU transmission of Downlink User Data 15 and Downlink User Data 16 on the link 4. Then, each of the STAs returns BA.

Fig. 3 illustrates an example in which such a series of operation is simultaneously performed on each of the links, but may be performed asynchronously in each of the links.

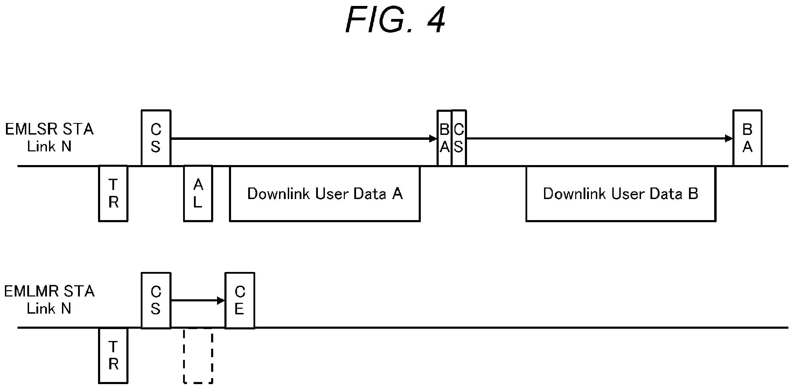

Fig. 4 illustrates a modification in which downlink multi-user multiplex communication (DL MU) is applied to the MLO. In Fig. 4, in a case where the AP performs downlink multi-user multiplex communication, the STAs return Clear To Send: CTS (CS) and reliably perform communication. In this case, a state of data transmission and reception viewed from the viewpoint of each of devices (STAs) of EMLSR and EMLMR that are data transmission destinations is illustrated. Provided that the horizontal axes are assumed as the time axes, a state of upward protrusion on the same time axis represents a state in which the STAs of EMLSR and EMLMR perform transmission operation on a link N, and a state of downward protrusion represents a state in which the STAs of EMLSR and EMLMR perform reception operation on the link N.

The EMLSR STA is formed to return, upon receiving a TR signal from the AP, Clear to Send: CTS (CS) to clearly indicate that the EMLSR STA operates on the link instead of RR. In this case, the EMLSR STA can inform devices of an overlapping network (OBSS) that setting of an NAV is performed by clearly returning the CS. Moreover, for example, in a case where retransmission is necessary, the EMLSR STA can indicate an intention to continuously use the link by also sending a frame corresponding to the CS at the time of returning BA.

The example illustrated in Fig. 4 illustrates a state in which the EMLSR STA returns BA and CS following reception of Downlink Multi-User Data A from the AP on the link N designated by AL from the AP, and then returns BA following reception of Downlink Multi-User Data B from the AP. As a result, a method of, even if the AP operates in multi-link operation, effectively performing multi-user multiplex communication even in the EMLSR STA that can use a link in a limited manner can be obtained.

Similarly, the EMLMR STA is formed to return, upon receiving a TR signal from the AP, CS to clearly indicate that the EMLMR STA operates on the link instead of RR. In this case, since RXOP can be set on other links in a case of the EMLMR STA, a resource is not necessarily allocated on the link on which the CS has been returned. In a case where AL in which multi-user multiplex communication is performed is not received from the AP on the link, or in a case where communication of the EMLMR STA is not included in the AL, the EMLMR STA may transmit Contention Free End (CF-End) (CE) indicating that reception is ended.

Note that, also for CS from the EMLSR STA, in a case where AL in which multi-user multiplex communication is performed is not received from the AP on the link, or in a case where communication of the EMLSR STA is not included in the AL, the EMLSR STA may transmit a CE frame corresponding to CF-End indicating that reception is ended.

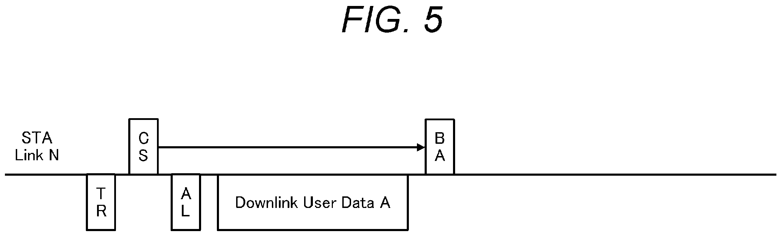

Fig. 5 illustrates another modification in which downlink multi-user multiplex communication (DL MU) is applied to the MLO. Fig. 5 illustrates a state of data transmission and reception from the viewpoint of an STA after the STA receives a TR signal from the AP on the link N. Provided that the horizontal axis is assumed as the time axis, a state of upward protrusion on the same time axis represents a state in which the STA performs transmission operation on the link N, and a state of downward protrusion represents a state in which the STA performs reception operation on the link N.

The STA returns Clear to Send: CTS (CS) on a link on which TR has been received from the AP, similarly to the above example illustrated in Fig. 4. In the example illustrated in Fig. 5, the STA returns BA following reception of the Downlink Multi-User Data A from the AP on the link N designated by AL from the AP.

Any STA can notify the devices of the OBSS that setting of an NAV is performed by transmitting CS after receiving AL on any link. Therefore, the STA can reliably receive downlink multi-user multiplex communication even if the STA is not an EMLSR STA.

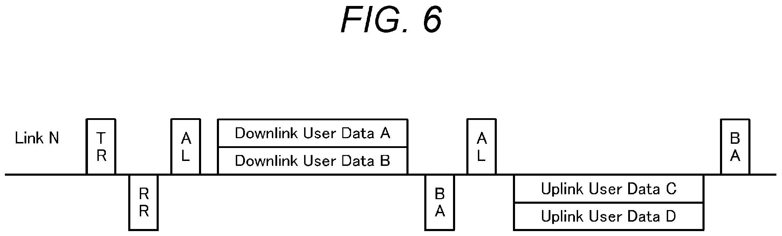

Fig. 6 illustrates a modification in which uplink multi-user multiplex communication (UL MU) is performed after downlink multi-user multiplex communication (DL MU) to which the MLO is applied. Fig. 6 illustrates a state of data transmission and reception from the viewpoint of the AP after the AP transmits a TR signal on the link N. Provided that the horizontal axis is assumed as the time axis, a state of upward protrusion on the same time axis represents a state in which the AP performs transmission operation on the link N, and a state of downward protrusion represents a state in which the AP performs reception operation on the link N.

On a link on which TR has been transmitted, RR is returned from the transmission destination STA to the AP. Then, the AP transmits AL according to the reception status of the RR returned from each STA, and then can transmit data addressed to each STA by downlink multi-user multiplex communication (the same as above). In the example illustrated in Fig. 6, the AP performs the Downlink User Data A and the Downlink User Data B as downlink multi-user multiplex communication for STAs on the link N. BA is returned from STAs that have received the data from the AP.

Thereafter, the AP allocates a resource for uplink multi-user multiplex communication on the link N and transmits AL on the link N. Then, transmission of Uplink User Data C and Uplink User Data D is performed on the link N as uplink multi-user multiplex communication (UL MU) from the STAs to the AP, and the AP receives the uplink multi-user multiplexed transmitted data. Note that the AP may return BA to the transmission source STAs after the uplink multi-user multiplex communication.

### D. Usage Detection Statuses of Multi-Links in AP and STA

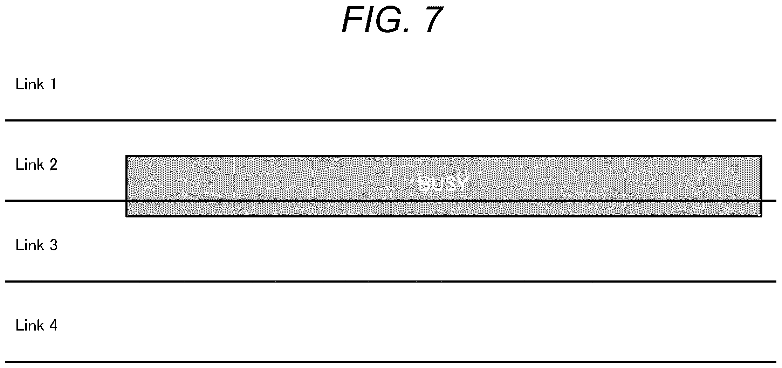

Fig. 7 illustrates an example of usage detection statuses of the multi-links in the AP 10 of the wireless LAN system illustrated in Fig. 1. In the example illustrated in Fig. 7, in a case where the AP 10 intends to perform the MLO using the links 1 to 4, only the link 2 cannot be used since a signal from another network is detected, and is in a Busy state.

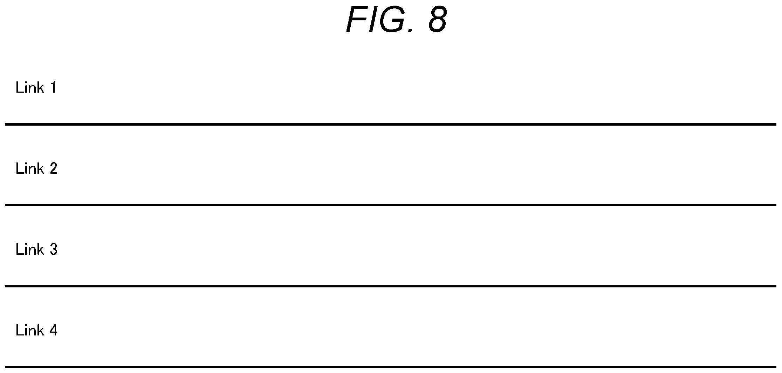

Fig. 8 illustrates an example of usage detection statuses of the multi-links in the STA 11 subordinate to the AP 10. In the example illustrated in Fig. 8, in a case where the STA 11 intends to perform the MLO using the links 1 to 4, all the links can be used since a signal from another network is not detected.

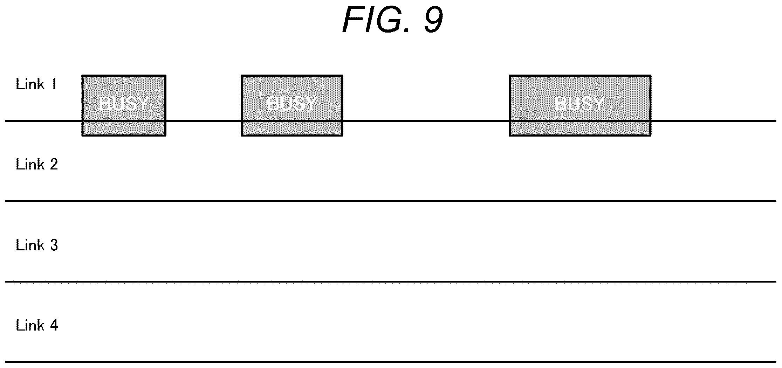

Fig. 9 illustrates an example of usage detection statuses of the multi-links in the STA 12 subordinate to the AP 10. In the example illustrated in Fig. 9, in a case where the STA 12 intends to perform the MLO using the links 1 to 4, the link 1 cannot be used since a signal from another network is detected intermittently, and is in a Busy state.

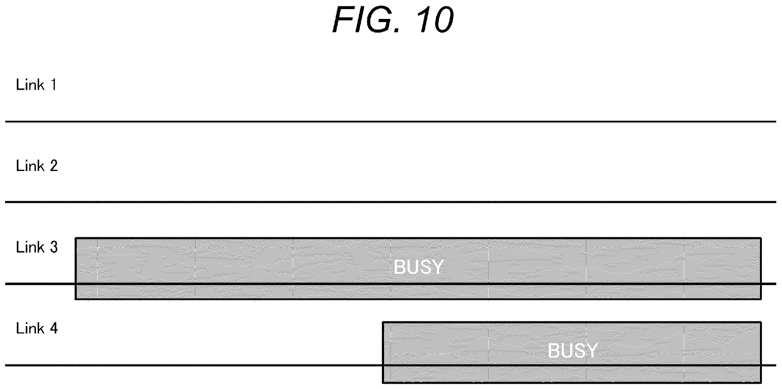

Fig. 10 illustrates an example of usage detection statuses of the multi-links in the STA 13 subordinate to the AP 10. In the example illustrated in Fig. 10, in a case where the STA 13 intends to perform the MLO using the links 1 to 4, the links 3 and 4 cannot be used since a signal from another network is detected, and are in a Busy state. Specifically, the STA 13 first detects a signal from another network on the link 3 that then enters a Busy state, and thereafter, detects a signal from another network also on the link 4 that then enters a Busy state.

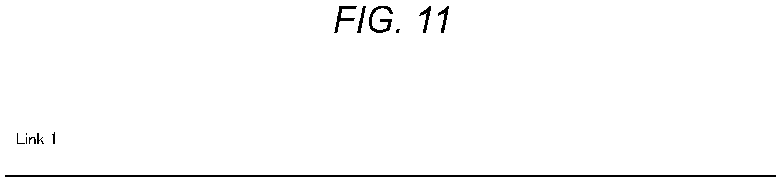

Fig. 11 illustrates an example of usage detection statuses of the multi-links in the STA 14 subordinate to the AP 10. In the example illustrated in Fig. 11, the STA 14 operates as an EMLSR device, and is in a state of setting RXOP of data using only the link 1 among the links 1 to 4.

As illustrated in Figs. 7 to 11, a case where the AP and each of the STAs subordinate thereto each have different available links, in other words, a case where performing multi-link operation using all the links is difficult is assumed. Furthermore, a case where an EMLSR device is included in the STAs subordinate to the AP is assumed.

### E. Implementation Example in Which Downlink Multi-User Communication is Applied to Multi-Links

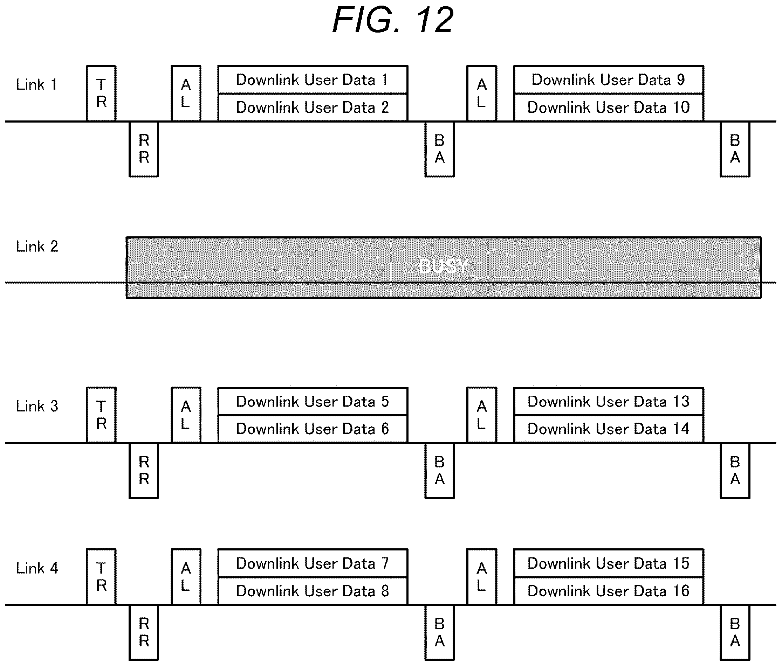

Fig. 12 illustrates an implementation example in which downlink multi-user communication is applied to multi-links in the AP 10 of the wireless LAN system illustrated in Fig. 1. Here, operation of the AP 10 is illustrated in which a case where downlink multi-user communication as illustrated in Fig. 3 is applied under the usage detection statuses of the multi-links illustrated in Fig. 7 is assumed. Provided that the horizontal axes are assumed as the time axes, data transmission and reception states of the links 1 to 4 are illustrated. In each of the time axes, a state of upward protrusion represents a state in which the AP 10 performs transmission operation on the corresponding link, and a state of downward protrusion represents a state in which the AP 10 performs reception operation on the corresponding link.

The AP 10 cannot perform DL MU communication since a signal from the OBSS is detected on the link 2 that then enters a Busy state. Therefore, the AP 10 transmits TR to the STAs 11 to 14 in which data that is a sending destination exists on links 1, 3, and 4, and starts a series of operation of DL MU communication.

On the other hand, the STAs 11 to 14 that are on the reception side receive the TR from the AP 10 on the links 1, 3, and 4. The STAs 11 to 14 return RR including RXOP information at that time to the AP 10 on the links 1, 3, and 4.

The AP 10 can grasp links that are capable of multi-user multiplex communication and available to each of the STAs 11 to 14 according to the reception statuses of the RR returned from the STAs 11 to 14. Then, the AP 10 transmits AL to the STAs 11 to 14 on the links 1, 3, and 4 to notify the STAs 11 to 14 in advance of links to be used for DL MU.

Next, the AP 10 performs DL MU communication addressed to the STAs 11 to 14 on each of the links 1, 3, and 4 on the basis of the AL. Specifically, the AP 10 transmits the Downlink User Data 1 and the Downlink User Data 2 on the link 1, transmits the Downlink User Data 5 and the Downlink User Data 6 on the link 3, and transmits the Downlink User Data 7 and the Downlink User Data 8 on the link 4.

Thereafter, in order to return BA from the STAs 11 to 14, the AP 10 may allocate resources for returning the BA in advance using an uplink multi-user multiplex technique. The STAs 11 to 14 may return BA using the resources. As a result, the AP 10 can determine the presence or absence of undelivered data that needs to be retransmitted according to the reception statuses of the BA from the STAs 11 to 14.

In a case where there is a remaining time in the TXOP in each of the links 1, 3, and 4, the AP 10 can transmit AL to the STAs 11 to 14 again. In the example illustrated in Fig. 12, the AP 10 performs DL MU communication addressed to the STAs 11 to 14 on each of the links 1, 3, and 4 on the basis of the AL. Specifically, the AP 10 transmits the Downlink User Data 9 and the Downlink User Data 10 on the link 1, transmits the Downlink User Data 13 and the Downlink User Data 14 on the link 3, and transmits the Downlink User Data 15 and the Downlink User Data 16 on the link 4. Note that, in the example illustrated in Fig. 12, data transmission is performed on all available links, but data transmission may be performed using only some of the links depending on the amount of the data.

Then, similarly to the above, in order to return BA from the STAs 11 to 14, the AP 10 may allocate resources for returning the BA in advance using the uplink multi-user multiplex technique. The STAs 11 to 14 may return BA using the resources. The AP 10 can determine the presence or absence of undelivered data that needs to be retransmitted according to the reception statuses of the BA from the STAs 11 to 14.

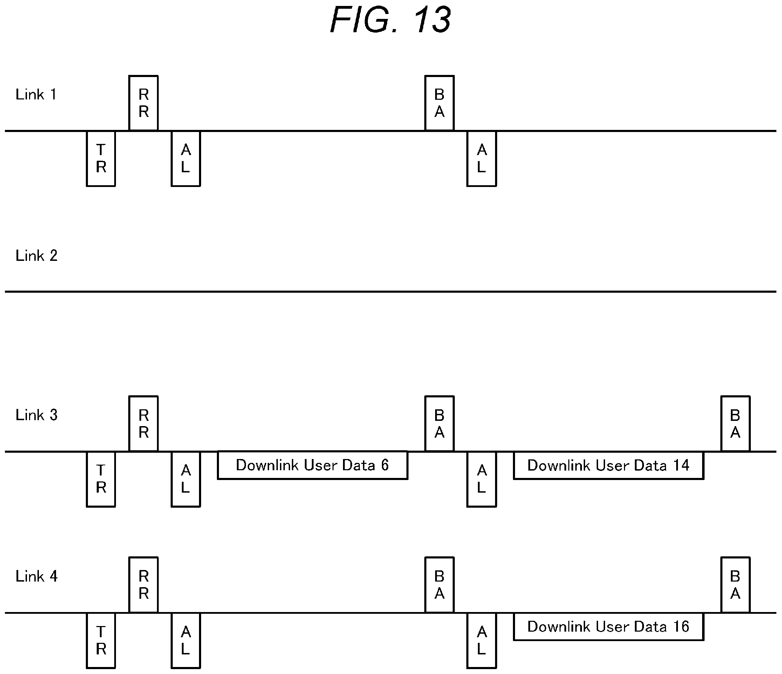

Fig. 13 illustrates an implementation example in which downlink multi-user communication is applied to the multi-links in the STA 11 subordinate to the AP 10. Here, operation of the STA 11 is illustrated in which a case where downlink multi-user communication as illustrated in Fig. 3 is applied under the usage detection statuses of the multi-links illustrated in Fig. 8 is assumed. Provided that the horizontal axes are assumed as the time axes, data transmission and reception states of the links 1 to 4 are illustrated. In each of the time axes, a state of upward protrusion represents a state in which the STA 11 performs transmission operation on the corresponding link, and a state of downward protrusion represents a state in which the SAT 11 performs reception operation on the corresponding link.

Since the STA 11 has not detected a signal from the OBSS on all of the links 1 to 4, the STA 11 receives TR from the AP 10 on the links 1, 3, and 4, and starts a series of operation of DL MU communication.

Then, the STA 11 returns RR including RXOP information at that time to the AP 10 on the links 1, 3, and 4. Since there is a possibility that DL MU communication is performed thereafter on the links 1, 3, and 4 on which the RR has been returned, the STA 11 waits for data from the AP 10 on all these links.

Thereafter, the STA 11 receives AL from the AP 10 on the links 1, 3, and 4. In the example illustrated in Fig. 13, since a resource for DL MU communication is allocated to the STA 11 by AL of the link 3, the STA 11 receives data of DL MU communication addressed to the STA 11 (Downlink User Data 6) on the link 3.

Next, the STA 11 returns BA in which the data reception statuses are described to the AP 10. The STA 11 returns BA on the link 3 on which the data has been received, but may return BA on another link as necessary. In the example illustrated in Fig. 13, the STA 11 returns BA in each of the links 1, 3, and 4.

In a case where the AP 10 has a remaining time in TXOP in each of the links 1, 3, and 4, there is a possibility that DL MU communication is performed thereafter. Therefore, the STA 11 may be formed to wait for data on each of the links 1, 3, and 4.

Then, in a case where the STA 11 receives AL from the AP 10 again on any of the links 1, 3, and 4, the STA 11 confirms the description content of the AL and waits for data. In the example illustrated in Fig. 13, since a resource for DL MU communication is allocated to the STA 11 by AL of the links 3 and 4, the STA 11 receives data of DL MU communication addressed to the STA 11 (Downlink User Data 14, Downlink User Data 16) on the links 3 and 4.

Then, the STA 11 returns BA in which the data reception statuses on the links 3 and 4 are described to the AP 10 on each link.

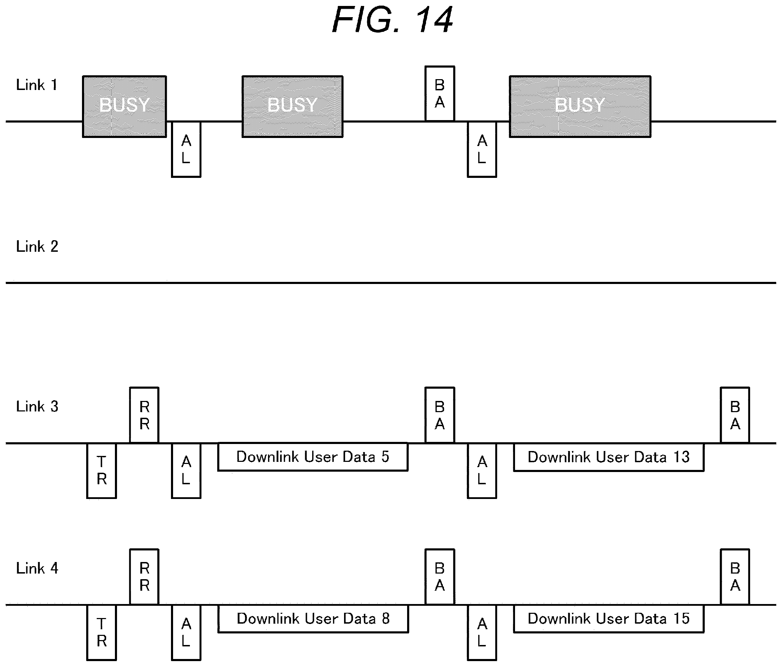

Fig. 14 illustrates an implementation example in which downlink multi-user communication is applied to the multi-links in the STA 12 subordinate to the AP 10. Here, operation is illustrated in which a case where the STA 12 applies downlink multi-user communication as illustrated in Fig. 3 under the usage detection statuses of the multi-links illustrated in Fig. 9 is assumed. Provided that the horizontal axes are assumed as the time axes, data transmission and reception states of the links 1 to 4 are illustrated. In each of the time axes, a state of upward protrusion represents a state in which the STA 12 performs transmission operation on the corresponding link, and a state of downward protrusion represents a state in which the STA 12 performs reception operation on the corresponding link.

Since the STA 12 has detected a signal from the OBSS on the link 1, the STA 12 receives TR from the AP 10 on the links 3 and 4, and starts a series of operation of DL MU communication. Then, the STA 12 returns RR including RXOP information at that time to the AP 10 on the links 3 and 4. Since there is a possibility that DL MU communication is performed thereafter on the links 3 and 4 on which the RR has been returned, the STA 12 waits for data from the AP 10 on these links.

Thereafter, the STA 12 receives AL from the AP 10 on the links 3 and 4. In the example illustrated in Fig. 14, since a resource for DL MU communication is allocated to the STA 12 by AL of the links 3 and 4, the STA 12 receives data of DL MU communication addressed to the STA 12 (Downlink User Data 5) on the link 3 and receives data of DL MU communication addressed to the STA 12 (Downlink User Data 8) on the link 4.

Next, the STA 12 returns BA in which the data reception statuses are described to the AP 10. The STA 12 returns BA on the links 3 and 4 on which the data has been received, but may return BA on another link as necessary.

In a case where the AP 10 has a remaining time in TXOP in each of the links 3 and 4, there is a possibility that DL MU communication is performed thereafter. Therefore, the STA 12 may be formed to wait for data in each of the links 3 and 4.

Then, in a case where the STA 12 receives AL from the AP 10 again in any of the links 3 and 4, the STA 12 confirms the description content of the AL and waits for data. In the example illustrated in Fig. 14, since a resource for DL MU communication is allocated to the STA 12 by AL of the links 3 and 4, the STA 12 receives data of DL MU communication addressed to the STA 12 (Downlink User Data 13, Downlink User Data 15) on each of the links 3 and 4.

Then, the STA 12 returns BA in which the data reception statuses on the links 3 and 4 are described to the AP 10 on each link.

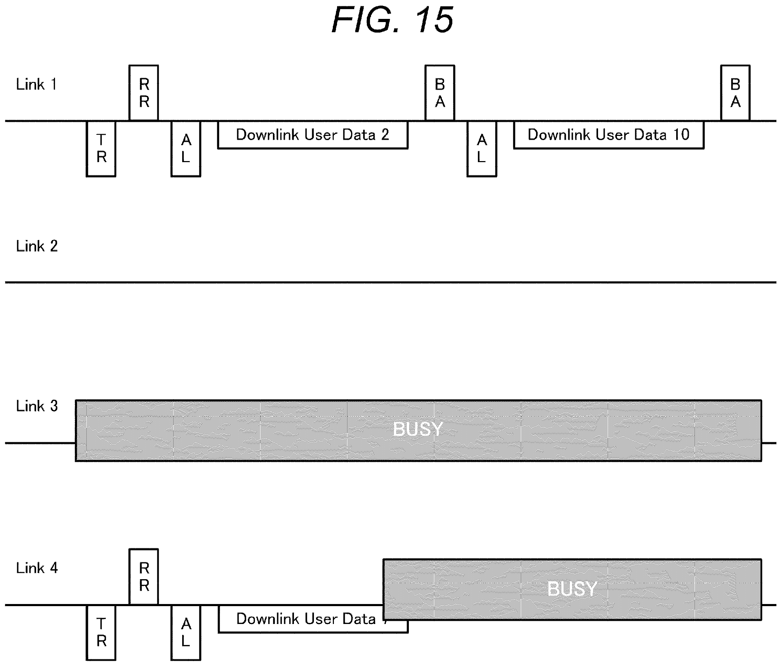

Fig. 15 illustrates an implementation example in which downlink multi-user communication is applied to the multi-links in the STA 13 subordinate to the AP 10. Here, operation is illustrated in which a case where the STA 13 applies downlink multi-user communication as illustrated in Fig. 3 under the usage detection statuses of the multi-links illustrated in Fig. 10 is assumed. Provided that the horizontal axes are assumed as the time axes, data transmission and reception states of the links 1 to 4 are illustrated. In each of the time axes, a state of upward protrusion represents a state in which the STA 13 performs transmission operation on the corresponding link, and a state of downward protrusion represents a state in which the STA 13 performs reception operation on the corresponding link.

Since the STA 13 has detected a signal from the OBSS on the link 3, the STA 13 receives TR from the AP 10 on links 1 and 4, and starts a series of operation of DL MU communication. Then, the STA 13 returns RR including RXOP information at that time to the AP 10 on the links 1 and 4. Since there is a possibility that DL MU communication is performed thereafter on the links 1 and 4 on which the RR has been returned, the STA 13 waits for data from the AP 10 on these links.

Thereafter, the STA 13 receives AL from the AP 10 on the links 1 and 4. In the example illustrated in Fig. 15, a resource for DL MU communication is allocated to the STA 13 by AL of the links 1 and 4. Therefore, the STA 13 receives data of DL MU communication addressed to the STA 13 (Downlink User Data 2) on the link 1 and receives data of DL MU communication addressed to the STA 13 (Downlink User Data 7) on the link 4.

However, the STA 13 detects a signal from the OBSS while receiving the Downlink User Data 7 on the link 4, and some data is undelivered. Therefore, the STA 13 describes BA in which the data reception statuses on the links 1 and 4 are described in BA returned on the link 1, and returns the BA to the AP 10.

In a case where the AP 10 has a remaining time in TXOP in each of the links 1 and 4, there is a possibility that retransmission of the undelivered data described above is performed thereafter as DL MU communication. Therefore, the STA 13 waits for data on all the links.

At this time, since the STA 13 has detected a signal from the OBSS on the links 3 and 4, the STA 13 can receive AL from the AP 10 only on the link 1. Then, upon confirming that a resource addressed to the STA 13 is allocated by the AL received again from the AP 10 on the link 1, the STA 13 receives, as data of DL MU communication addressed to the STA 13 (Downlink User Data 10) on the link 1, for example, the undelivered data of the retransmitted Downlink User Data 7.

Then, the STA 13 returns BA in which the data reception status on the link 1 is described to the AP 10 on the link 1.

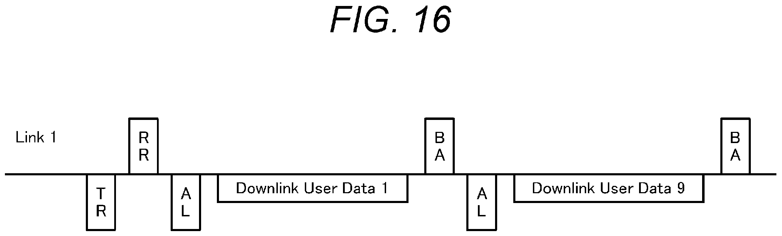

Fig. 16 illustrates an implementation example in which downlink multi-user communication is applied to the multi-links of an EMLSR device. Here, similarly to the example illustrated in Fig. 11, operation is illustrated in which a case where the STA 14 subordinate to the AP 10 operates as an EMLSR device and is in a state of setting RXOP of data using only the link 1 among the links 1 to 4, and downlink multi-user communication illustrated in Fig. 3 is applied is assumed. The drawing illustrates a state of data transmission of the link 1 using the horizontal axis as the time axis, and a state of upward protrusion represents a state in which the STA 14 performs transmission operation on the link 1, and a state of downward protrusion represents a state in which the STA 14 performs reception operation on the link 1.

Upon receiving TR from the AP 10 on the link 1, the STA 14 returns RR including RXOP information at that time to the AP 10 on the link 1. Since there is a possibility that DL MU communication is performed thereafter on the link 1 on which the RR has been returned, the STA 14 waits for data from the AP 10 on the link 1.

Thereafter, the STA 14 receives AL from the AP 10 on the link 1. In the example illustrated in Fig. 16, a resource for DL MU communication is allocated to the STA 14 by AL of the link 1. Therefore, the STA 14 receives data of DL MU communication addressed to the STA 14 (Downlink User Data 1) on the link 1. Then, the STA 14 returns BA in which the data reception status is described to the AP 10 on the link 1.

Furthermore, in a case where the AP 10 has a remaining time in TXOP in the link 1, there is a possibility that DL MU communication is performed thereafter. Therefore, the STA 14 waits for data on the link 1.

Upon confirming that a resource addressed to the STA 14 is allocated by the AL received again from the AP 10 on the link 1, the STA 14 receives data of DL MU communication addressed to the STA 14 (Downlink User Data 9) on the link 1.

Then, the STA 14 returns BA in which the data reception status on the link 1 is described to the AP 10 on the link 1.

### F. Sequence of Downlink Multi-User Multiplex Communication of Each Link

In this item F, a sequence of downlink multi-user multiplex communication for each of the links in a case where the usage detection status of each of the links as illustrated in Figs. 7 to 11 is assumed in the AP 10 of the wireless LAN system illustrated in Fig. 1 will be described.

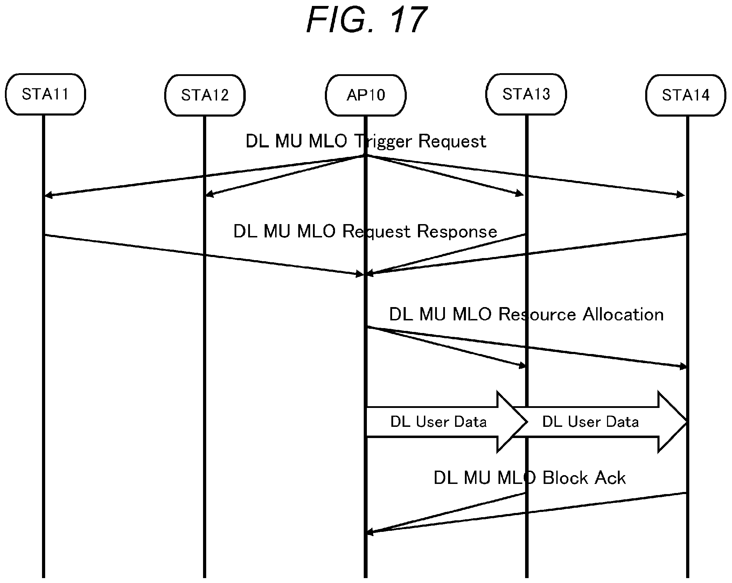

Fig. 17 illustrates a sequence of downlink multi-user multiplex communication on the link 1. In the illustrated sequence, control information and user data are exchanged between the AP 10 and the STAs 11 to 14 subordinate to the AP 10.

First, DL MU MLO Trigger Request (TR) that triggers the start of the MLO to which DL MU communication is applied is transmitted from the AP 10 to the STAs 11 to 14 subordinate to the AP 10.

Next, the STAs 11, 13, and 14 that have been able to receive the TR from the AP 10 return DL MU MLO Request Response (RR) in which RXOP information is described to the AP 10.

Here, the AP 10 allocates resources of DL MU communication on the basis of the information of the RXOP of each of the STAs 11, 13, and 14, and transmits AL (DL MU MLO Resource Allocation) to the STAs 13 and 14 to be multiplexed on the link 1 as necessary.

Then, the AP 10 transmits multiplexed data (DL User Data) to each of the STAs 13 and 14 on the link 1. As illustrated in Figs. 15 and 16, the Downlink User Data 2 is transmitted to the STA 13, and the Downlink User Data 1 is transmitted to the STA 14.

Upon receiving the multiplexed data (DL User Data), the STAs 13 and 14 each return BA (DL MLO Block Ack) in which the reception status is described to the AP 10 on the link 1.

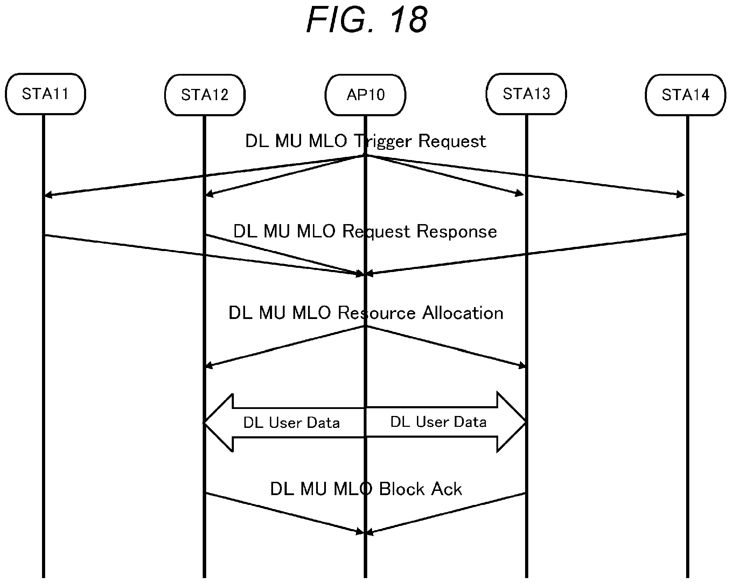

Fig. 18 illustrates a sequence of downlink multi-user multiplex communication on the link 4. In the illustrated sequence, control information and user data are exchanged between the AP 10 and the STAs 11 to 14 subordinate to the AP 10.

First, DL MU MLO Trigger Request (TR) that triggers the start of the MLO to which DL MU communication is applied is transmitted from the AP 10 to the STAs 11 to 14 subordinate to the AP 10.

Next, the STAs 11 to 13 that have been able to receive the TR from the AP 10 return DL MU MLO Request Response (RR) in which RXOP information is described to the AP 10.

Here, the AP 10 allocates resources of DL MU communication to the STAs 12 and 13 on the basis of the information of the RXOP of each of the STAs 11 to 13, and transmits AL (DL MU MLO Resource Allocation) to the STAs 12 and 13 to be multiplexed on the link 4 as necessary.

Then, the AP 10 transmits multiplexed data (DL User Data) to each of the STAs 12 and 13 on the link 4.

Upon receiving the multiplexed data (DL User Data), the STAs 12 and 13 return BA in which the reception status is described to the AP 10 on the link 4. As illustrated in Figs. 14 and 15, the Downlink User Data 8 is transmitted to the STA 12, and the Downlink User Data 7 is transmitted to the STA 13. However, the STA 13 detects a signal from the OBSS while receiving the Downlink User Data 7, and some data is undelivered. Therefore, the STA 13 describes BA in which the data reception statuses on the links 1 and 4 are described in BA returned on the link 1, and returns the BA to the AP 10.

The STAs 12 and 13 each return BA (DL MLO Block Ack) in which the reception status of the multiplexed data (DL User Data) is described to the AP 10 on the link 4. At this time, the STA 13 describes in the BA that some data has been undelivered.

### G. Configuration of Wireless Communication Device

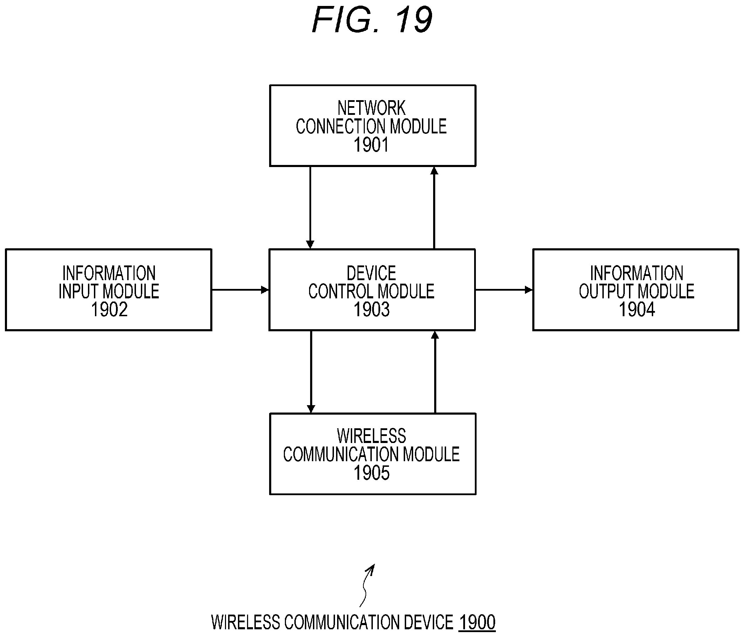

Fig. 19 schematically illustrates a functional configuration of a wireless communication device 1900 to which the present disclosure is applied. The illustrated wireless communication device 1900 can operate as an access point (AP) in the wireless LAN system illustrated in Fig. 1, for example. Needless to say, the wireless communication device 1900 may operate as a communication terminal (STA) subordinately to any access point.

The illustrated communication device 1900 includes each functional module of a network connection module 1901, an information input module 1902, a device control module 1903, an information output module 1904, and a wireless communication module 1905. Note that the communication device 1900 may further include other functional modules that are not illustrated, but the modules are not essential to implement the present disclosure and are not illustrated.

For example, in a case where the wireless communication device 1900 operates as an access point, the network connection module 1901 has a configuration in which a function as a communication modem or the like for connecting to a wide-area communication network such as the Internet is mounted. For example, the network connection module 1901 connects a public communication line and the Internet via an Internet service provider.

The information input module 1902 is a module for inputting information indicating an instruction from the user, and includes, for example, a push button, a keyboard, a touch panel, a mouse, and other input devices.

The device control module 1903 corresponds to a portion that performs control to operate a communication device intended by the user as an access point.

The information output module 1904 is a portion that specifically displays an operation state of the wireless communication device 1900 and information obtained via the network, includes, for example, a display element such as a light emitting diode (LED) display, a liquid crystal panel, or an organic electroluminescence (EL) display, a speaker that outputs voice or music, and the like, and can display and notify the user of necessary information as necessary.

The wireless communication module 1905 is a functional module for processing wireless communication. The present disclosure is basically implemented by a function provided by the wireless communication module 1905.

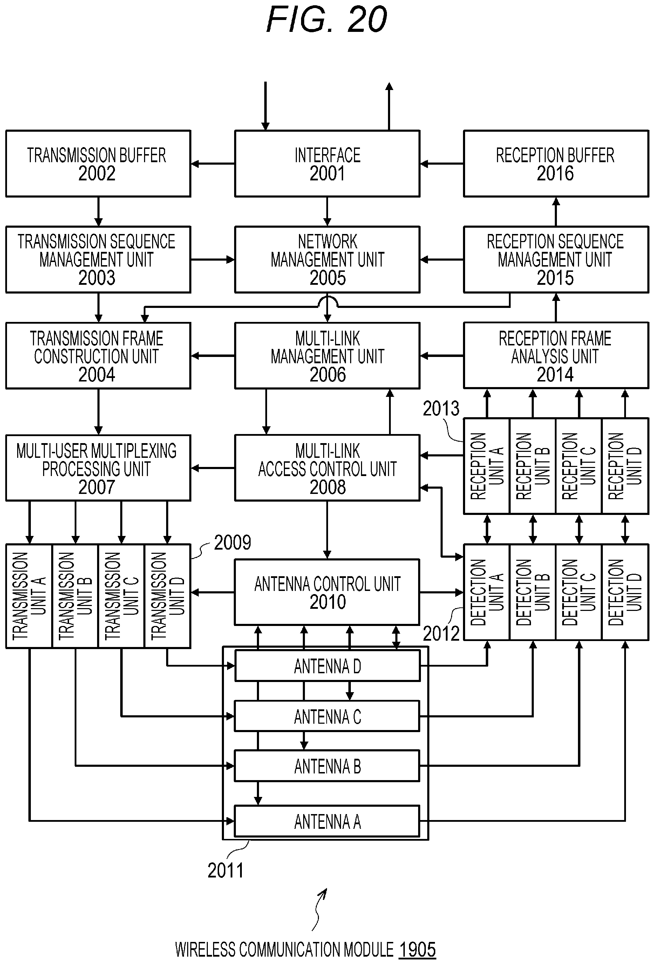

Fig. 20 illustrates an internal configuration of the wireless communication module 1905 that is one of the functional modules included in the wireless communication device 1900 illustrated in Fig. 19, in detail. The illustrated wireless communication module 1905 includes an interface 2001, a transmission buffer 2002, a transmission sequence management unit 2003, a transmission frame construction unit 2004, a network management unit 2005, a multi-link management unit 2006, a multi-user multiplexing processing unit 2007, a multi-link access control unit 2008, a transmission unit 2009, an antenna control unit 2010, an antenna unit 2011, a detection unit 2012, a reception unit 2013, a reception frame analysis unit 2014, a reception sequence management unit 2015, and a reception buffer 2016.

The interface 2001 is connected to other modules (device control module 1903 and the like) in the wireless communication device 1900, and exchanges various types of information and data.

The transmission buffer 2002 temporarily stores, for example, data received from other modules and to be transmitted wirelessly.

The transmission sequence management unit 2003 grasps data to be transmitted for each destination and manages the transmission sequence. The transmission frame construction unit 2004 constructs a transmission frame for each destination.

The network management unit 2005 manages each of information of an access point that belongs to a network of the wireless communication device 1900 (BSS) and information of a communication terminal. The multi-link management unit 2006 manages operation of the MLO.

The multi-user multiplexing processing unit 2007 performs processing for multi-user multiplex communication.

The multi-link access control unit 2008 controls transmission and reception on the basis of a predetermined access control procedure on each link of multi-links.

The transmission unit 2009 performs transmission processing of data to be transmitted. The transmission unit 2009 includes a plurality of (the number corresponding to the number of the multi-links of) transmission units A to D in order to individually transmit each link of the multi-links and user multiplexed data. Note that, in Fig. 20, the four transmission units A to D are illustrated for convenience, but the number of transmission units may be three or less or five or more. However, in a case where the wireless communication device 1900 is an EMLSR device, the transmission unit 2009 may be only one transmission unit.

The antenna control unit 2010 controls the antenna unit 2011 that transmits and receives wireless signals. The antenna unit 2011 includes an antenna element that actually performs transmission and reception operation. As the antenna unit 2011, the number of antennas A to D corresponding to the number of the multi-links is prepared as necessary, but may be three or less or five or more.

The detection unit 2012 detects a signal received by the antenna unit 2011. The detection unit 2012 includes a plurality of (the number corresponding to the number of the multi-links of) detection units A to D. Note that, in Fig. 20, the four detection units A to D are illustrated for convenience, but the number of detection units may be three or less or five or more. Provided that, even in a case where the wireless communication device 1900 is an EMLSR device, detection units corresponding to the number of the links are prepared.

The reception unit 2013 performs reception processing of data received via the antenna unit 2011 and the detection unit 2012. The reception unit 2013 includes a plurality of (the number corresponding to the number of the multi-links of) reception units A to D in order to individually receive each link of the multi-links and user multiplexed data. Note that, in Fig. 20, the four reception units A to D are illustrated for convenience, but the number of reception units may be three or less or five or more. However, in a case where the wireless communication device 1900 is an EMLSR device, the transmission unit 2009 may be only one reception unit.

The reception frame analysis unit 2014 decodes predetermined data from a signal received by each of the reception units A to D to construct reception data. The reception sequence management unit 2015 extracts a portion of data (payload) from a received frame and manages a received sequence. The reception buffer 2016 temporarily stores received data.

In a case where the wireless communication device 1900 operates as an access point, transmission processing of TR and AL is instructed by the multi-link management unit 2006, and the TR and AL are each constructed as a transmission frame by the transmission frame construction unit 2004.

Furthermore, in a case where the wireless communication device 1900 operates as an access point, RR and BA transmitted from communication terminals are each processed by each of the reception units A to D for each individual link and each individual user, and processed as received frames in the reception frame analysis unit 2014.

On the other hand, in a case where the wireless communication device 1900 operates as a communication terminal and receives TR, the reception frame analysis unit 2014 recognizes the TR, the multi-link management unit 2006 collects information of RXOP, sets RR to be transmitted to the access point, and the transmission frame construction unit 2004 constructs an RR frame.

Furthermore, in a case where the wireless communication device 1900 operates as a communication terminal and receives AL from the access point of the connection destination, the reception frame analysis unit 2014 recognizes the AL, and the multi-link management unit 2006 instructs reception processing using a resource of DL MU communication allocated by the AL.

Furthermore, in a case where the wireless communication device 1900 operates as a communication terminal, a BA frame is constructed according to the reception status of data addressed to the wireless communication device 1900 in the reception sequence management unit 2015, and the transmission frame construction unit 2004 constructs the BA frame.

### H. Frame Configuration

In this item H, a configuration of a frame used in the wireless LAN system to which the present disclosure is applied will be described.

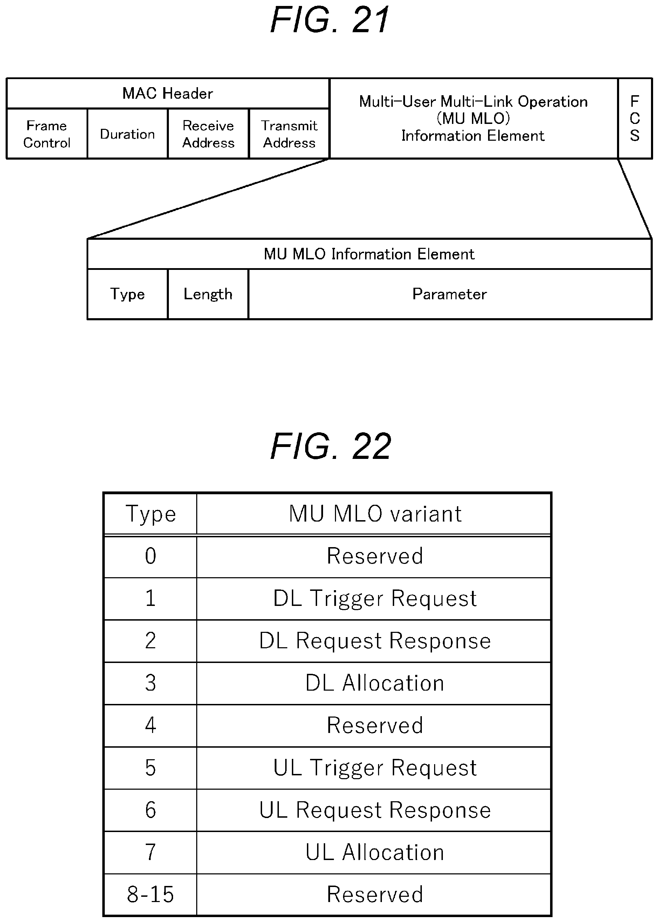

Fig. 21 illustrates a configuration of a management frame necessary for setting the MLO. The management frame here includes a DL Trigger Request (TR) frame, a DL Request Response (RR) frame, and a DL Allocation (AL) frame.

The frame illustrated in Fig. 21 includes, as a predetermined media access control (MAC) header, each field of Frame Control for identifying a type of the frame, Duration indicating duration of the frame, Receive Address for designating a reception-side device, and Transmit Address for designating a transmission-side device.

Furthermore, the frame illustrated in Fig. 21 includes a Multi-User Multi-Link Operation (MU MLO) information element (Information Element) as an MAC payload, and a frame check sequence (FCS) for data error detection is further added to the end of the frame.

As the MU MLO information element, Type indicating the format of the frame of the MU MLO, Length indicating the information length, and a parameter required for actual MLO operation are described. The configuration of the MU MLO information element is different for each management frame. Details of the configuration of the information element in each management frame will be described below.

Fig. 22 illustrates a correspondence relationship between values described in a Type field of the MU MLO information element and frame formats corresponding to the respective values. In the drawing, 1: DL Trigger Request, 2: DL Request Response, 3: DL Allocation, 5: UL Trigger Request, 6: UL Request Response, and 7: UL Allocation are defined.

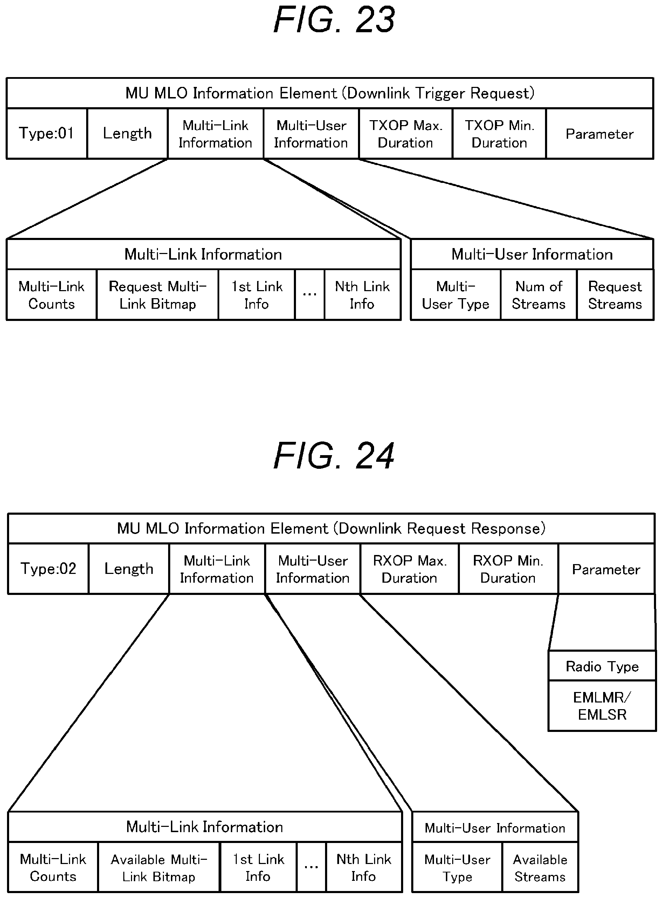

Fig. 23 illustrates a configuration of an MU MLO Infornmation Element field of the DL Trigger Request (TR) frame.

This information element is indicated as an MU MLO information element of the DL Trigger Request assuming Type = 01. Moreover, this information element includes Multi-Link Information indicating parameters related to multi-link operation, Multi-User Information indicating parameters related to multi-user communication, TXOP Max. Duration indicating the maximum length of a transmission opportunity of downlink communication, TXOP Min. Duration similarly indicating the minimum necessary length, and other parameters added as necessary. On a communication terminal side that has received a TR frame, a remaining time of a transmission opportunity held by the transmission side can be estimated on the basis of information of the maximum length of the transmission opportunity described in the TXOP Max. Duration. Note that, in addition to this, any parameter Parameter may be described as necessary.

The Multi-Link Information field includes parameters of Multi-Link Counts indicating the number of the multi-links, Request Multi-Link Bitmap for identifying a channel of a requested multi-link in a bitmap format, 1st Link Info to Nth Link Info indicating information of first to Nth links, and the like.

Furthermore, the Multi-User Information field includes parameters of Multi-User Type indicating a multi-user multiplexing method, Number of Streams indicating the number of multiplexing per link, Request Streams indicating the number of request streams requested to be simultaneously received by a reception-side communication terminal, and the like.

Fig. 24 illustrates a configuration of an MU MLO Infornmation Element field of the DL Request Response (RR) frame.

This information element is indicated as an MU MLO information element of the DL Request Response assuming Type = 02. Moreover, this information element includes Multi-Link Information indicating parameters related to multi-link operation, Multi-User Information indicating parameters related to multi-user communication, RXOP Max. Duration indicating the maximum length of a reception opportunity of downlink communication, RXOP Min. Duration similarly indicating the minimum necessary length, and other parameters Parameter added as necessary.

The Multi-Link Information field includes parameters of Multi-Link Counts indicating the number of the multi-links, Available Multi-Link Bitmap for identifying a channel of an available multi-link in a bitmap format, 1st Link Info to Nth Link Info indicating information of first to Nth links, and the like.

Furthermore, the Multi-User Information field includes parameters of Multi-User Type indicating a multi-user multiplexing method, Number of Streams indicating the number of multiplexing per link, Available Streams indicating the number of available streams, and the like.

Furthermore, this information element includes information of EMLSR/EMLMR for identifying whether the communication terminal is EMLSR or EMLMR and the like as other parameters Parameter.

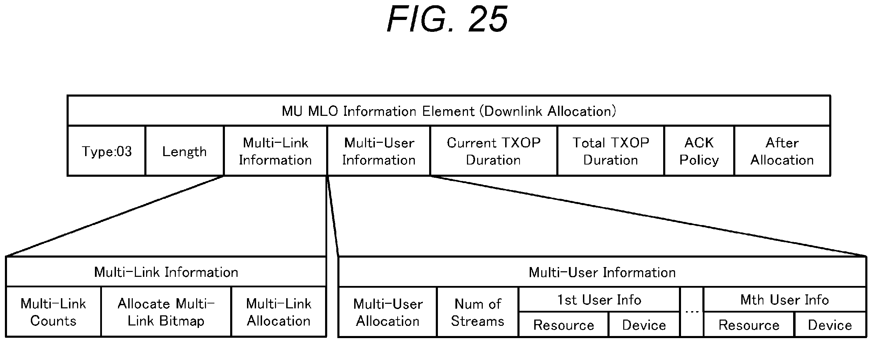

Fig. 25 illustrates a configuration of an MU MLO Infornmation Element field of the DL Allocation (AL) frame.

This information element is indicated as an MU MLO information element of the DL Allocation assuming Type = 03. Moreover, this information element includes parameters of Multi-Link Information indicating parameters related to multi-link operation, Multi-User Information indicating parameters related to multi-user communication, Current TXOP Duration indicating a transmission opportunity of downlink communication in the Allocation frame, Total TXOP Duration indicating a transmission opportunity in a case where usage is continuing, and, as other parameters added as necessary, ACK Policy indicating a method of returning ACK, After Allocation indicating later resource allocation, and the like. The ACK Policy parameter can be used for performing notification of allocation of a resource for receiving block ACK from the reception side.

The Multi-Link Information field includes parameters of Multi-Link Counts indicating the number of the multi-links, Allocate Multi-Link Bitmap for identifying a channel of an allocated multi-link in a bitmap format, Multi-Link Allocation corresponding to parameters of a bandwidth of a link on which the Allocation frame is transmitted and the like, and the like.

Furthermore, the Multi-User Information field includes parameters of Multi-User Allocation indicating a multi-user multiplexing method, Number of Streams indicating the number of multiplexing per link, 1st Used Info to Mth User Info indicating first to Mth user information, and the like. Each piece of user information includes parameters of Resource indicating an allocated resource, a parameter of Device for identifying a device and the like.

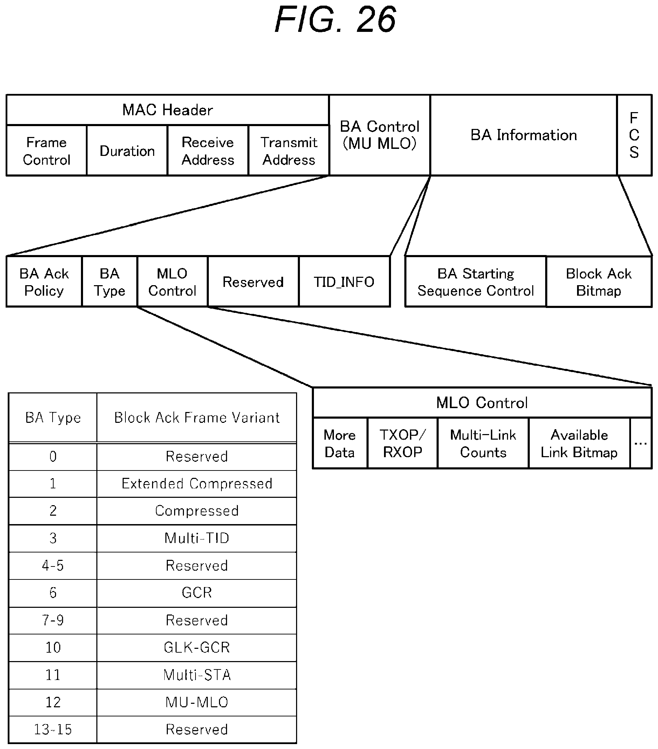

Fig. 26 illustrates a configuration of a downlink Block Acknowledgement (BA) frame. The BA frame has a configuration in which information corresponding to a conventional BA frame is described, includes each field of BA Control and BA Information subsequent to a predetermined MAC header (same as above), and FCS for error detection is added at the end.

The BA Control field includes each parameter of BA Ack Policy, BA Type, MLO Control, and TID_INFO. The BA Type indicates a format of the BA frame. Fig. 26 also illustrates a correspondence relationship between values described in the BA Type field and BA frame formats corresponding to the respective values. In the present embodiment, 12: MU MLO is defined as a new BA Type.

Furthermore, in the present embodiment, an MLO Control parameter is described in a bit portion that has been conventionally Reserved in the BA Control field as necessary. The MLO Control includes parameters of More Data indicating that more data is required, TXOP/RXOP for identifying whether TXOP or RXOP can be set, Multi-Link Counts indicating the number of links capable of multi-link operation, Available Link Bitmap indicating available links in a bitmap format, and the like.

### I. Operation Example of Downlink Communication

In this item I, operation performed by an access point and a communication terminal during downlink communication in the wireless LAN system to which the present disclosure is applied will be described.

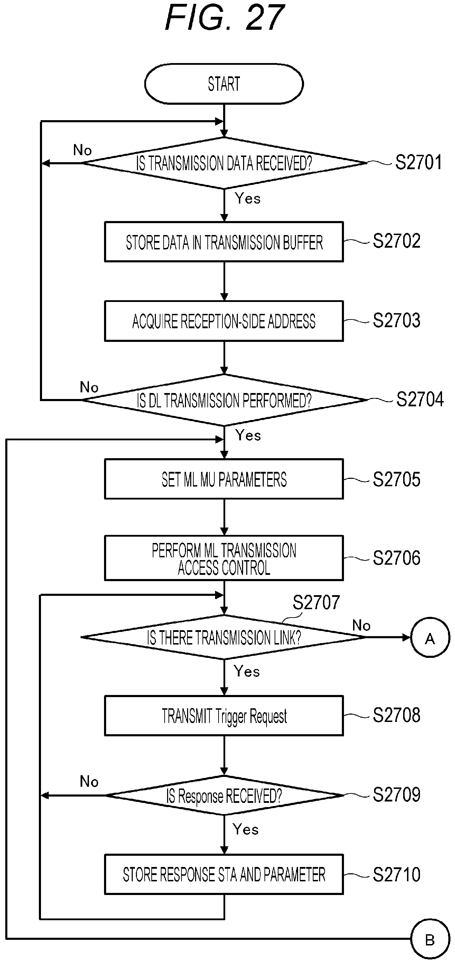

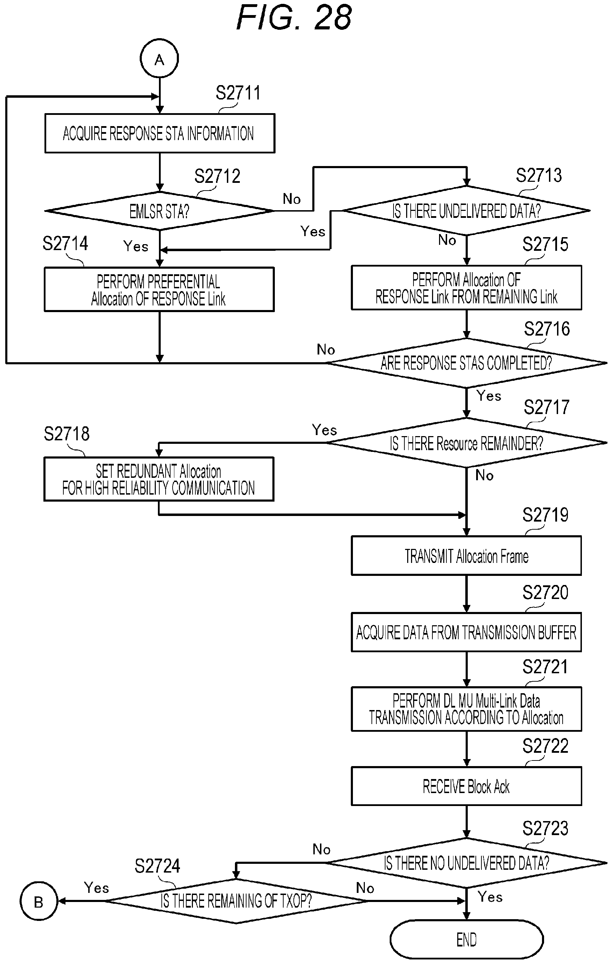

Figs. 27 and 28 illustrate operation performed by an access point during downlink communication in the form of flowcharts. Here, an operation sequence of activating downlink multi-user multiplex communication according to the present disclosure by transmitting a trigger from the access point as a part of the MLO is illustrated in the form of flowcharts.

First, upon receiving transmission data from the upper layer of the communication protocol (Yes in step S2701), the access point stores the data in the transmission buffer 2002 (step S2702), and acquires the address of the reception-side communication device (step S2703).

Then, in a case where downlink multi-user communication is performed in multi-links (Yes in step S2704), the access point sets multi-user and multi-link parameters (step S2705), and performs access control on each link that performs multi-link operation (step S2706).

Here, in a case where there is a link available for transmission (Yes in step S2707), the access point transmits a trigger request (Trigger Request: TR) frame on the link (step S2708). Then, in a case where a response (Request Response: RR) frame has been able to be received from a communication terminal (STA) on the link (Yes in step S2709), the access point sequentially stores the STA that has responded and the response parameter together with corresponding link information (step S2710).

Then, returning to step S2707, the access point transmits the TR frame on all links available for transmission.

Thereafter, upon ending reception of the RR frame on all the links available for transmission (No in step S2707), the access point acquires information from an STA that has responded on each of the links (step S2711). Here, in a case where the STA that has responded is a device having large restriction on available links or available resources like an EMLSR device (Yes in step S2712), the access point preferentially allocates a response link to the device (step S2714). Furthermore, in a case where the device is not a device device having large restriction on available links or available resources like EMLSR (No in step S2712) but the response is from an STA in which undelivered data exists (Yes in step S2713), the access point preferentially allocates a response link to the device (step S2714). Then, in a case where the response is from an STA other than that, the access point appropriately allocates a remaining resource (step S2715). In steps S2714 and S2715, the access point sets parameters related to multi-link operation on the basis of the allocated resources, and also sets parameters related to multi-user communication.

Upon completing resource allocation for all STAs that have responded to the TR frame (Yes in step S2716), in a case where there is a remainder in the resources (Yes in step S2717), the access point may allocate a resource redundantly for data for which high reliability communication is required as necessary (step S2718).

Then, the access point generates an AL frame in which the parameters related to multi-link operation set in step S2714 or S2715 and the parameters related to multi-user communication are described, and transmits the AL frame on available links (step S2719). Subsequently, the access point acquires the data stored in the transmission buffer 2002 in step S2702 (step S2720) and performs downlink multi-user communication on each of the links according to the resource allocation described above (step S2721).

Thereafter, the access point receives a BA frame from each of the STA that are reception destinations using resources allocated by the ACK Policy parameter of the AL frame (step S2722). Then, the access point checks whether there is undelivered data on the basis of the reception confirmation status of the BA frame from each of the STAs (step S2723).

In a case where there is no undelivered data (Yes in step S2723), the access point ends this processing.

On the other hand, in a case where there is undelivered data (No in step S2723), the access point checks whether there is a remaining time of the TXOP (S2724).

In a case where there is a remaining time of the TXOP (Yes in S2724), if the access point continuously needs to perform downlink multi-user multiplex communication, the access point can return to step S2705 and perform downlink multi-user multiplex communication on each of the links again. Furthermore, in a case where there is no remaining time of the TXOP (No in step S2724), the access point temporarily ends the present processing.

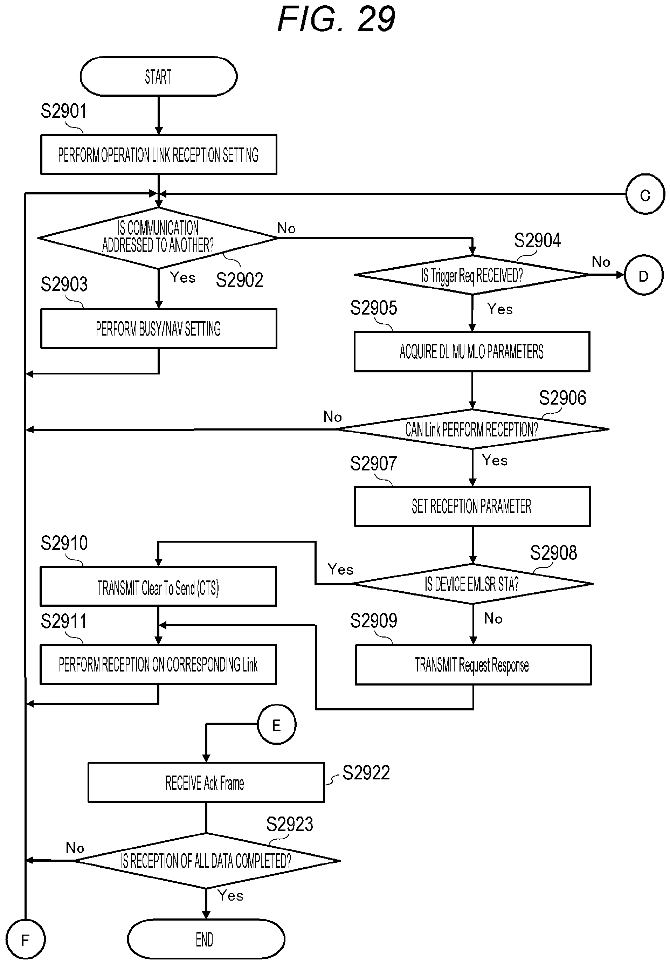

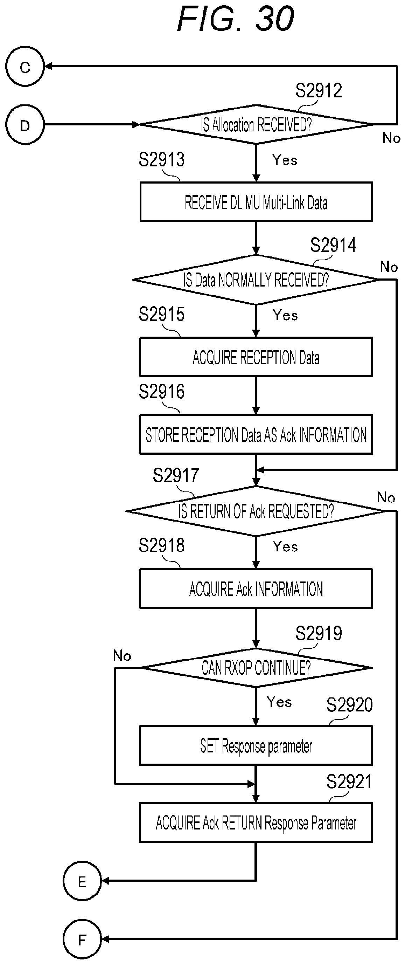

Figs. 29 and 30 illustrate operation performed by a communication terminal during downlink communication in the form of flowcharts. Here, an operation sequence of activating downlink multi-user multiplex communication according to the present disclosure by the communication terminal receiving a trigger from the access point as a part of the MLO is illustrated in the form of flowcharts.

First, the communication terminal performs reception operation on an operation link of multi-link operation (step S2901). The communication terminal may be formed such that detection operation of a predetermined preamble signal is performed in the multi-links even in a case of a device having large restriction on available links or available resources like an EMLSR device.

Here, in a case where a signal addressed to the OBSS or another communication device is received (Yes in step S2902), the communication terminal sets a BUSY state on the link (step S2903). Alternatively, in step S2903, in a case where the communication terminal receives a Request to Send (RTS) or Clear to Send (CTS) frame, or the like, the communication terminal may set a network allocation vector (NAV) for virtual carrier sense according to time information of Duration described therein or the like.

On the other hand, in a case where a trigger request frame for downlink multi-user multiplex communication is received from the access point of the connection destination (Yes in step S2904), the communication terminal acquires parameters for the MLO in DL MO communication from the received frame (S2905), and then, in a case where RXOP can be set in the corresponding link (S2906), the communication terminal sets a reception parameter (step S2907). However, in a case where the NAV is set in the corresponding link, the communication terminal does not set the RXOP in the link.

Next, the communication terminal checks whether the communication terminal is a device having large restriction on available links or available resources like an EMLSR device (step S2908). Then, in a case where the communication terminal is a device having large restriction on available links or available resources like an EMLSR device, and further identifies a link to be used, a CTS frame may be transmitted to the access point as necessary (step S2910). Furthermore, in a case where the communication terminal is not a device having large restriction on available links or available resources like an EMLSR device, or in other cases, the communication terminal transmits an RR frame (step S2909).

Then, the communication terminal waits for data of downlink multi-user communication on the link on which the CTS frame or the RR frame has been transmitted (step S2911).

Here, in a case where an AL frame is received from the access point of the connection destination (step S2712), the communication terminal receives data of later downlink multi-user communication according to the setting (step S2713).

Next, the communication terminal checks whether the data (MAC Protocol Data Unit: MPDU) has been able to be normally received by the MLO in the DL MU communication (step S2914). In a case where the data has been able to be normally received (Yes in step S2914), the access point stores the reception data in the reception buffer 2016 (step S2915), and stores a received sequence number as ACK information (S2916). Note that in a case where there is an error in the reception data, the reception data is not stored, and the sequence number is not stored as ACK information.

Moreover, in a case where return of a BA frame is requested after all the data is received (Yes in S2917), the communication terminal acquires the ACK information collected in the preceding step S2916 (step S2918). Then, in a case where the communication terminal can continue the TXOP of the access point and can set the RXOP in the link (step S2919), such as a case where a signal from the OBSS is not detected or a case where there is no error in the data, the communication terminal continues to set a parameter of a response (Request Response) (S2920).

Then, for example, the communication terminal acquires a parameter of a resource for BA return set continuously to the DL MU communication (S2921), and then the communication terminal transmits a BA frame using a resource designated by an ACK Policy parameter of an AL frame (step S2922).

Then, in a case where reception of all the data addressed to the communication terminal is completed (Yes in step S2923), the communication terminal ends the present processing. Furthermore, in a case where return of a BA frame is not requested (No in S2917) or in a case where reception of all the data addressed to the communication device is not completed (No in step S2923), the processing returns to S2902 and the above-described operation is repeatedly performed.

In Figs. 29 and 30, the operation is described as closed operation by one link, but in a case where the communication terminal performs reception of multi-user communication using a plurality of links, the reception processing may be performed temporally simultaneously on each of the links. In the determination in step S2912, operation of repeating the processing each time a frame is received on each of the links is described.

### J. Effects

In this item J, effects brought about by the present disclosure are summarized.
(1) A transmission-side communication device receives reception opportunity (RXOP) information from reception-side communication devices on links on which transmission opportunities (TXOP) have been obtained, so that a link available in multi-links can be identified for each of the reception-side communication devices.
(2) In an environment where an OBSS exists, even in a case where the multi-links are unavailable in all the reception-side communication devices, the transmission-side communication device can perform multi-user communication using links available to the reception-side communication devices each time.
(3) A reception-side communication device that is EMLSR can also return RXOP information to the transmission-side communication device on a link on which reception is currently performed. Therefore, the transmission-side communication device can grasp which link the reception-side communication device that is EMLSR can use to perform communication.
(4) By a communication sequence in which the transmission-side communication device transmits a Trigger Request frame and the reception-side communication devices return Request Response, the transmission-side communication device can identify available links at that time.
(5) The transmission-side communication device can allocate an optimum link to each of the reception-side communication devices on the basis of the reception statuses of Request Response returned from the reception-side communication devices, and can efficiently use multi-links for which transmission opportunities are obtained.
(6) The reception-side communication devices return Block ACK frames as necessary, so that the transmission-side communication device can grasp whether retransmission is necessary. Furthermore, in a case where the transmission-side communication device can continue to use transmission paths, the transmission-side communication device can continuously perform transmission by the reception-side communication devices returning responses in which RXOP information is described.
(7) In short, the transmission-side communication device not only transmits data to one communication terminal on each of the links, but also can obtain a method of performing data communication using a link on which the communication terminal can perform reception using the technology of multi-user multiplex communication, so that transmission paths can be efficiently used by multi-user communication being applied to the MLO.

### INDUSTRIAL APPLICABILITY

The present disclosure is heretofore described in detail with reference to the specific embodiment. However, it is obvious that those skilled in the art can make modifications and substitutions of the embodiment without departing from the gist of the present disclosure.

The present disclosure is applied to, for example, a network environment in which using all channels is difficult in multi-link operation, and each communication terminal notifies an access point of a multi-link in which a reception opportunity can be set, and the access point allocates a link on which data is transmitted to each communication terminal on the basis of information in the notification, thereby implementing downlink multi-user multiplex communication applied to the multi-link operation. Furthermore, according to the present disclosure, since the access point sets a reception opportunity of downlink multiplex communication to each subordinate communication terminal and performs data transmission, a resource of a link on which a communication terminal that is EMLSR is operating is also effectively allocated to the communication terminal. That is, according to the present disclosure, throughput in the entire network can be improved by application to a network environment in which multi-link operation using all channels is difficult.

Needless to say, the present disclosure is also applied to a network in which multi-link operation using all channels is easy, and the access point efficiently allocates a resource of a link on which data is transmitted to each communication terminal according to the amount of data to be transmitted and the like, thereby improving the throughput in the entire network.

Furthermore, in the present specification, the embodiment in which the present disclosure is applied to a wireless LAN system based on the IEEE 802.11 standard has been mainly described, but the application range of the present disclosure is not limited to a specific wireless standard, and the present disclosure can be similarly applied to various types of wireless networks.

In short, the present disclosure is heretofore described in a form of an example and the content described in this specification should not be interpreted in a limited manner. In order to determine the gist of the present disclosure, the claims should be taken into consideration.

Note that the present disclosure can have the following configurations.

(1) A communication device including
   a communication unit capable of wirelessly communicating on a plurality of links,
   a communication processing unit that performs processing of simultaneously transmitting data to a plurality of reception-side communication devices, and
   a control unit that performs control to transmit data using an optimum link to each of the plurality of reception-side communication devices.
(2) The communication device according to (1) described above,
   in which the control unit performs control to transmit a trigger request signal for requesting information regarding a reception opportunity from the plurality of reception-side communication devices on a link on which a transmission opportunity has been acquired.
(3) The communication device according to (2) described above,
   in which the control unit performs control to receive a request response signal for responding to the trigger request signal.
(4) The communication device according to (3) described above,
   in which the control unit determines an optimum link for each reception-side communication device on the basis of a request response signal from the plurality of reception-side communication devices.
(5) The communication device according to (4) described above,
   in which the control unit determines an optimum link for each reception-side communication device with a request response signal received from a reception-side communication device having large restriction on a communication resource prioritized.
(6) The communication device according to any one of (1) to (5) described above,
   in which the control unit performs control to transmit an allocation signal including information regarding a link allocated to each reception-side communication device and information regarding multi-user multiplex communication.
(7) The communication device according to (4) described above,
   in which the control unit controls simultaneous data transmission to the plurality of reception-side communication devices using the plurality of links on the basis of information regarding a link allocated to each reception-side communication device and information regarding multi-user multiplex communication.
(8) The communication device according to any one of (1) to (7) described above,
   in which the control unit performs control to allocate a resource for receiving block ACK from the plurality of reception-side communication devices.
(9) The communication device according to (6) or (7) described above,
   in which the control unit repeatedly transmits the allocation signal in a case where there is a remaining time of the transmission opportunity.
(10) A communication method in a communication device capable of wirelessly communicating on a plurality of links, the method including
   a step of determining an optimum link for each of the plurality of reception-side communication devices, and
   a step of simultaneously transmitting data to a plurality of reception-side communication devices using an optimum link of each reception-side communication device.
(11) A communication device including
   a communication unit capable of wirelessly communicating on a plurality of links,
   a communication processing unit that performs processing of receiving data addressed to the communication device among data simultaneously transmitted from a transmission-side communication device to a plurality of reception-side communication devices, and
   a control unit that notifies the transmission-side communication device of a reception opportunity of a link available to the communication device, and performs control to receive data on a link designated by the transmission-side communication device.
(12) The communication device according to (11) described above,
   in which the control unit performs control to return a request response signal on a link on which a reception opportunity can be acquired in response to reception of a trigger request signal from the transmission-side communication device.
(13) The communication device according to (12) described above,
   in which the control unit performs control to return a request response signal on an all link on which a reception opportunity has been able to be acquired.
(14) The communication device according to any one of (11) to (13) described above,
   in which the control unit performs control to transmit a Clear to Send signal on a link on which reception is performed in a case where the communication unit or the communication processing unit has large restriction on a communication resource.
(15) The communication device according to (12) or (13) described above,
   in which the control unit performs control to wait for reception of data addressed to a plurality of reception-side communication devices from the transmission-side communication device on a link on which the request response signal has been transmitted.
(15-1) The communication device according to any one of (12) to (14) described above,
   in which the control unit performs control to wait for reception of data addressed to a plurality of reception-side communication devices from the transmission-side communication device on a link designated by an allocation signal received from the transmission-side communication device.
(16) The communication device according to any one of (11) to (15) described above,
   in which the control unit performs control to return block ACK to the transmission-side communication device.
(17) The communication device according to (16) described above,
   in which the control unit performs control to transmit the block ACK using a resource allocated from the transmission-side communication device.
(18) The communication device according to (16) or (17) described above,
   in which the control unit performs control to perform signal waiting processing in a case where data retransmission from the transmission-side communication device is necessary.
(19) The communication device according to any one of (11) to (18) described above,
   in which the control unit returns information regarding a reception opportunity of the communication device in a case where there is a remaining time of a transmission opportunity of the transmission-side communication device.
(20) A communication method in a communication device capable of wirelessly communicating on a plurality of links, the method including
   a step of notifying a transmission-side communication device of information regarding a reception opportunity of a link available to the communication device, and
   a step of receiving data addressed to the communication device among data simultaneously transmitted from the transmission-side communication device to a plurality of reception-side communication devices on a link designated by the transmission-side communication device.

### REFERENCE SIGNS LIST

- 1900: Wireless communication device
- 1901: Network connection module
- 1902: Information input module
- 1903: Device control module
- 1904: Information output module
- 1905: Wireless communication module
- 2001: Interface
- 2002: Transmission buffer
- 2003: Transmission sequence management unit
- 2004: Transmission frame construction unit
- 2005: Network management unit
- 2006: Multi-link management unit
- 2007: Multi-user multiplexing processing unit
- 2008: Multi-link access control unit
- 2009: Transmission unit
- 2010: Antenna control unit
- 2011: Antenna unit
- 2012: Detection unit
- 2013: Reception unit
- 2014: Reception frame analysis unit
- 2015: Reception sequence management unit
- 2016: Reception buffer

## Claims

1. A communication device comprising:
a communication unit capable of wirelessly communicating on a plurality of links;
a communication processing unit that performs processing of simultaneously transmitting data to a plurality of reception-side communication devices; and
a control unit that performs control to transmit data using an optimum link to each of the plurality of reception-side communication devices.

2. The communication device according to claim 1,
wherein the control unit performs control to transmit a trigger request signal for requesting information regarding a reception opportunity from the plurality of reception-side communication devices on a link on which a transmission opportunity has been acquired.

3. The communication device according to claim 2,
wherein the control unit performs control to receive a request response signal for responding to the trigger request signal.

4. The communication device according to claim 3,
wherein the control unit determines an optimum link for each reception-side communication device on a basis of a request response signal from the plurality of reception-side communication devices.

5. The communication device according to claim 4,
wherein the control unit determines an optimum link for each reception-side communication device with a request response signal received from a reception-side communication device having large restriction on a communication resource prioritized.

6. The communication device according to claim 1,
wherein the control unit performs control to transmit an allocation signal including information regarding a link allocated to each reception-side communication device and information regarding multi-user multiplex communication.

7. The communication device according to claim 4,
wherein the control unit controls simultaneous data transmission to the plurality of reception-side communication devices using the plurality of links on a basis of information regarding a link allocated to each reception-side communication device and information regarding multi-user multiplex communication.

8. The communication device according to claim 1,
wherein the control unit performs control to allocate a resource for receiving block ACK from the plurality of reception-side communication devices.

9. The communication device according to claim 6,
wherein the control unit repeatedly transmits the allocation signal in a case where there is a remaining time of the transmission opportunity.

10. A communication method in a communication device capable of wirelessly communicating on a plurality of links, the method comprising:
a step of determining an optimum link for each of the plurality of reception-side communication devices; and
a step of simultaneously transmitting data to a plurality of reception-side communication devices using an optimum link of each reception-side communication device.

11. A communication device comprising:
a communication unit capable of wirelessly communicating on a plurality of links;
a communication processing unit that performs processing of receiving data addressed to the communication device among data simultaneously transmitted from a transmission-side communication device to a plurality of reception-side communication devices; and
a control unit that notifies the transmission-side communication device of a reception opportunity of a link available to the communication device, and performs control to receive data on a link designated by the transmission-side communication device.

12. The communication device according to claim 11,
wherein the control unit performs control to return a request response signal on a link on which a reception opportunity can be acquired in response to reception of a trigger request signal from the transmission-side communication device.

13. The communication device according to claim 12,
wherein the control unit performs control to return a request response signal on an all link on which a reception opportunity has been able to be acquired.

14. The communication device according to claim 11,
wherein the control unit performs control to transmit a Clear to Send signal on a link on which reception is performed in a case where the communication unit or the communication processing unit has large restriction on a communication resource.

15. The communication device according to claim 12,
wherein the control unit performs control to wait for reception of data addressed to a plurality of reception-side communication devices from the transmission-side communication device on a link on which the request response signal has been transmitted.

16. The communication device according to claim 11,
wherein the control unit performs control to return block ACK to the transmission-side communication device.

17. The communication device according to claim 16,
wherein the control unit performs control to transmit the block ACK using a resource allocated from the transmission-side communication device.

18. The communication device according to claim 16,
wherein the control unit performs control to perform signal waiting processing in a case where data retransmission from the transmission-side communication device is necessary.

19. The communication device according to claim 11,
wherein the control unit returns information regarding a reception opportunity of the communication device in a case where there is a remaining time of a transmission opportunity of the transmission-side communication device.

20. A communication method in a communication device capable of wirelessly communicating on a plurality of links, the method comprising:
a step of notifying a transmission-side communication device of information regarding a reception opportunity of a link available to the communication device; and
a step of receiving data addressed to the communication device among data simultaneously transmitted from the transmission-side communication device to a plurality of reception-side communication devices on a link designated by the transmission-side communication device.
